# EUROPÄISCHE PATENTSCHRIFT

(11) **EP 1 797 699 B1**
(45) Veröffentlichungstag und Bekanntmachung des Hinweises auf die Patenterteilung: **20.03.2019**
(21) Anmeldenummer: 05790068.0
(22) Anmeldetag: 27.09.2005
(51) Int. Cl.: H04L 29/08, G06Q 30/02

(54) **VERFAHREN ZUM GEZIELTEN STEUERN VON ONLINE-WERBUNG UND VORRICHTUNG SOWIE SYSTEM DAFÜR**
METHOD FOR THE TARGETED CONTROL OF ONLINE ADVERTISING AND ASSOCIATED METHOD AND SYSTEM
PROCEDE DE COMMANDE CIBLEE DE PUBLICITE EN LIGNE, DISPOSITIF ET SYSTEME ASSOCIES

(30) Priorität: 29.09.2004 DE 102004047815; 29.09.2004 US 614339 P; 20.09.2005 DE 102005044936
(43) Veröffentlichungstag der Anmeldung: 20.06.2007
(73) Patentinhaber: 1&1 Internet AG, 56410 Montabaur (DE)
(72) Erfinder: LAMSFUSS, René, Klaus, 76689 Karlsdorf (DE); KERN, Hansjörg, 76135 Karlsruhe (DE); EHRLICH, Matthias, 76227 Karlsruhe (DE)
(86) Internationale Anmeldenummer: PCT/EP2005/010434
(87) Internationale Veröffentlichungsnummer: WO 2006/034844

(56) Entgegenhaltungen:
- EP-A- 1 338 995
- WO-A-01/27760
- WO-A-99/60503
- DE-A1- 10 036 734
- DE-A1- 10 045 279
- DE-A1- 10 137 677
- DE-A1- 19 964 253
- EAGLE N; PENTLAND A: "Social Serendipity: Proximity Sensing and Cueing", MIT MEDIA LABORATORY TECHNICAL NOTE 580 , 31 May 2004 (2004-05-31), pages 1-18, XP002392394, Retrieved from the Internet: URL:http://www-static.cc.gatech.edu/gvu/cc g/paper_of_week/socialserendipidty.pdf

## Beschreibung

### Technisches Gebiet der Erfindung

Im Allgemeinen betrifft die Erfindung das gezielte Steuern von Online-Werbung in einem Informationsnetzwerk. Im besonderen betrifft die Erfindung ein Verfahren, eine Vorrichtung sowie ein System zum Steuern und Anzeigen von Werbebannern im Internet, insbesondere auf Webseiten und in internetgestützten Anwender-Programmen, wie z.B. Browsern und Kommunikations-Programmen (Email, Instant Messaging, Chat oder Internet-Telefonie). Weiterhin betrifft die Erfindung im besonderen das gezielte Steuern von Online-Werbung im Internet zwecks Reichweitenverlängerung der Online-Werbung von einem ersten Internet-Plattform auf eine zweite, größere Internet-Plattform.

### Stand der Technik

Als Stand der Technik werden vier Schriften zitiert.

Die erste Offenlegungsschrift DE 199 64 253 A1 beschreibt ein Verfahren zum selektiven Übermitteln von Inhalten, insbesondere von Werbung über ein bi- oder multidirektionales Netzwerk.

Die zweite Offenlegungsschrift DE 100 45 279 A1 beschreibt eine Vorrichtung und ein Verfahren zur Zusammenstellung von individualisierten Informationen in einem Datennetz.

Die dritte Offenlegungsschrift DE 100 36 734 A1 beschreibt ein Verfahren zum interaktiven Kommunizieren zwischen einem über eine sendende/empfangende Zugangskomponente auf das Internet zugreifenden Endgerät eines Nutzers und einem internetfähigen Webserver.

Die vierte Schrift, eine PCT-Anmeldung mit der Veröffentlichungsnummer WO 01/27760 A2 beschreibt ein Verfahren zur Analyse des Benutzerverhaltens in Computernetzen zur Optimierung der Webpräsenz.

### Technischer Hintergrund der Erfindung

Für die Werbung wird in zunehmendem Maße auch das Internet benutzt. Diese sog. Online-Werbung hat im Vergleich zur Werbung über die klassischen Medien, wie Printmedien (Zeitungen und Magazine) sowie Rundfunk und Fernsehen, den Vorteil, dass dort Techniken zur gezielten Steuerung von Werbung eingesetzt werden können. So werden z.B. Werbeflächen, sogenannte Werbebanner (Engl. ad banner oder kurz "ad"), verschiedener Größen angezeigt, wobei diese dem Internetnutzer über seinen Browser temporär oder auch permanent für eine Session usw. angezeigt werden können. Das Erscheinen eines Banners erfolgt z.B. als sog. Pop-Up-Fenster beim Besuch einer Website/Webpage oder als sog. Banner innerhalb einer Website/Webpage. Zur Gestaltung und zum Steuern der Banner sind schon länger verschiedene Techniken und Programme bekannt, wie etwa Flash® von der Firma Macromedia oder die Freeware "Adware" usw. Die Schaltung von Werbung im Internet erfolgt etwa auf Portalen wie z.B. auf dem der Anmelderin, welches unter der URL http://www.web.de besucht werden kann. Andere Werbeformen sind u.a. die Einbindung von Bannern in Internet-Anwender-Programmen und Online-Diensten, insbesondere im Freeware-Bereich. Zu nennen sind hier z.B. die Freeware-Version des Browsers Opera (s. http://www.opera.com)oder der von der Anmelderin angebotene FreeMail-Dienst (http://www.freemail.de).

Eine gezielte Steuerung von Werbung hat den Vorteil., dass die beworbenen potentiellen Kunden möglichst genau diejenige Werbung erhalten, die sie direkt anspricht und von ihnen als angenehm empfunden wird. Denn eine Werbung, die lästig ist und als störend empfunden wirkt, verfehlt völlig das Ziel, den Kunden für den Kauf der beworbenen Ware oder Dienstleistung zu gewinnen. In den letzten Jahren hat man immer mehr erkannt, dass gerade das Internet für eine gezielte Werbung sehr geeignet ist. Denn im Internet hat man einen spontanen Rückkanal vom Client des Internetnutzers zum Server des Werbeanbieters, so dass man das Nutzerverhalten erfassen und für die Steuerung von Werbung analysieren kann. Hierzu werden speziell eingerichtete Rechnersysteme eingesetzt, die verschiedene Online-Daten erfassen und auswerten, wie z.B. anhand der Top-Level-Domain das jeweilige Land, von dem aus der Internetnutzer surft, das aktuelle Datum und die lokale Ortszeit dort etc. Ein sog. AdServer steuert einen oder mehrere sog. ContentServer, und liefert entsprechende Werbeinhalte in unterschiedlichen Formaten an diesen aus. Aufgrund der ausgewerteten Online-Daten kann somit die Internet-Werbung intelligent gesteuert werden. Der Begriff "Steuern" ist hierbei sehr allgemein zu verstehen und umfasst auch das Bereitstellen und/oder Ausliefern von der jeweiligen Werbeform (z.B. Banner). Die Steuervorrichtung (hier: der AdServer) ist also auch eine Vorrichtung zur Bereitstellung und/oder Auslieferung der Werbeform an den/die ContentServer. Die Auslieferung durch den AdServer erfolgt vorzugsweise auf Anfrage des jeweiligen ContentServers. Beispielsweise kann die Werbung tagesaktuell und in der jeweiligen Landessprache geschaltet werden. Viele weitere Formen der gezielten Werbung-(sog. Targeting) sind möglich. Der AdServer ist dabei die ausführende Steuereinrichtung. Die Grund-Funktionen von AdServern wird z.B. in der Internet-Enzyklopädie Wikipedia unter der folgenden URL beschrieben: http://de.wikipedia.org/wiki/Adserver.

Da die bekannten, mit AdServern ausgestatteten Systeme üblicherweise nur die über den Rückkanal gewonnen Online-Daten auswerten, können sie die Steuerung von Internet-Werbung nur eingeschränkt variieren, nämlich nur in dem Umfang der sich ergebenden Änderungen dieser Online-Daten. Es wäre jedoch wünschenswert, ein Verfahren und ein System zu haben, die eine deutlich flexiblere und variationsreichere Steuerung der Werbung ermöglichen könnten. Außerdem beziehen sich die ausgewerteten Online-Daten überwiegend auf technische Parameter, wie etwa Domain, Datum und Uhrzeit und weniger auf persönliche Daten des jeweiligen Internetnutzers. Auch deshalb ist die herkömmliche Ziellenkung der Werbung sehr beschränkt.

Darüber hinaus wäre es wünschenswert, ein Verfahren und ein System zur Steuerung von Werbung zu haben, die nicht allein im Internet im engeren Sinne (also im sog. WorldWideWeb) eingesetzt werden können, sondern auch in anderen Informationsnetzwerken eingesetzt werden können, wie etwa in Telekommunikationsnetzwerken (PSTN, GSM, UMTS) oder in Kabel- und Satellitennetzwerken mit Rückkanal usw. Dies gilt vor allem vor dem Hintergrund, dass die herkömmlichen Netzwerktechnologien in zunehmendem Maße miteinander zu einem einzigen globalen Informations- und Kommunikationsnetzwerk verschmelzen.

### Aufgabe der Erfindung

Es ist deshalb Aufgabe der Erfindung, ein Verfahren zum Steuern von Werbung in einem Informationsnetzwerk vorzuschlagen, das die oben genannten Nachteile in vorteilhafter Weise überwindet. Außerdem soll ein das Verfahren ausführendes System vorgeschlagen werden.

### Beschreibung der Erfindung

Die Aufgabe wird gelöst durch ein Verfahren mit den Merkmalen des Anspruch 1 sowie durch ein entsprechendes System mit den Merkmalen des Anspruchs 12.

Demnach wird ein Verfahren zum Steuern von Werbung in einem Informationsnetzwerk, über das mehrere Nutzer Zugriff auf Informationen haben, vorgeschlagen, bei dem jedem Nutzer eine Nutzer-Identität zugeordnet wird und für jeden Nutzer erste Daten erfasst werden, die Angaben über sein Zugriffsverhalten auf die Informationen enthalten. Die Nutzer-Identität wird dem Nutzer anonym zugeordnet, d.h. dass das System die erfassten Daten lediglich unter einer Identität in Form eines anonymen Codes ohne konkrete Beziehung zu Person des Nutzers verwaltet und verarbeitet. Außerdem werden für den jeweiligen Nutzer zweite Daten erfasst, die Angaben über sein Interesse an der Art von Informationen enthalten. Dann werden noch die ersten und/oder zweiten Daten durch dritte Daten ergänzt, die Angaben über die Person des jeweiligen Nutzers enthalten. Diese Angaben sind also personenbezogene Daten, d.h. personenspezifische Merkmale, wie z.B. Alter oder Geschlecht. Danach werden aus den Daten für den jeweiligen Nutzer Steuerungsdaten extrahiert und an eine Steuervorrichtung zur Steuerung der Werbung übermittelt.

Außerdem werden eine Vorrichtung sowie ein System zum Steuern von Werbung in dem Informationsnetzwerk vorgeschlagen. Das System umfasst mehrere Systemkomponenten, nämlich eine Datenverarbeitungsvorrichtung, die jedem Nutzer eine Nutzer-Identität zugeordnet und die erste Daten auswertet, welche eine erste Vorrichtung bereitstellt und welche Angaben über sein Zugriffsverhalten auf die Informationen enthalten. Die Datenverarbeitungsvorrichtung wertet auch noch für den jeweiligen Nutzer zweite Daten aus, welche eine zweite Vorrichtung bereitstellt und welche Angaben über das Interesse des Nutzers an der Art von Informationen enthalten, wobei die Datenverarbeitungsvorrichtung die ersten und/oder zweiten Daten durch dritte Daten ergänzt, welche eine dritte Vorrichtung bereitstellt und welche Angaben über die Person des jeweiligen Nutzers enthalten. Außerdem extrahiert die Datenverarbeitungsvorrichtung aus den Daten für den jeweiligen Nutzer Steuerungsdaten und übermittelt diese an eine Steuervorrichtung zur Steuerung der Werbung.

Durch diese Kombination und Auswertung verschiedenartiger Daten aus mehreren Datenquellen wird eine sehr treffgenaue Steuerung von Werbung erreicht. Dabei kann auch auf Daten zurückgegriffen werden, die herkömmlicherweise bereits für andere Zwecke erfasst werden oder für bestimmte Dienste erhoben werden.

In diesem Zusammenhang sind zunächst die ersten Daten zu nennen, die Angaben über das Zugriffverhalten des jeweiligen Nutzers enthalten. Dies sind insbesondere Online-Daten, die im Wesentlichen durch sogenannte LogWriter in Form von LogFiles erfasst werden, um üblicherweise den Zugriff von Rechnern, wie z.B. Endnutzer-PCs zu kontrollieren. Die Daten der LogFiles enthalten Angaben wie z.B. die IP-Adressen der zugreifenden Rechner und die Zugriffzeiten. Daneben können auch sog. Cookies eingesetzt werden. Alle diese Angaben erlauben direkte Rückschlüsse auf das Zugriffverhalten des Rechners und zumindest indirekte Rückschlüsse auf das Nutzerverhalten selbst.

Erfindungsgemäß werden nun diese Angaben als erste Daten zur Steuerung der Werbung ausgewertet. Dabei braucht die IP-Adresse im System nicht verwertet und/oder gespeichert werden, was hinsichtlich des Datenschutzes vorteilhaft ist. Darüber hinaus werden aber auch zweite Daten genutzt, die durch Befragung der Nutzer erfasst werden. Es handelt sich hierbei im Wesentlichen um Befragungsdaten über die Interessen der Nutzer. Es sind also Angaben über die vom jeweiligen Nutzer bevorzugten Themen und Interessensgebiete, für die beim Nutzer eine hohe Akzeptanz erwartet werden darf, wenn man ihn hierzu mit neusten Informationen und somit auch Werbung versorgt. Diese zweiten Daten können vorzugsweise durch Online-Befragung erhoben werden. Andere Möglichkeiten wären Datenerhebungen durch Befragung per Briefpost und/oder Email. Allein schon die Kombination der ersten Daten (Online-Daten, LogFiles) mit den zweiten Daten (Befragungsdaten) bietet eine neue und sehr breite Datenbasis für eine besonders zielgenaue Auswertung. Somit kann z.B. schon ein Zusammenhang erkannt werden, wann (Jahreszeit, Tageszeit etc.) der Nutzer sich für welche Themen interessiert. Beispielsweise interessiert sich ein Nutzer im Frühjahr besonders stark für das Thema Reisen und Urlaub, im Winter hingegen für Einkaufen und Restaurantbesuche. Es kann evtl. auch noch die IP-Adresse erfasst werden, um zu prüfen, ob der Nutzer sich auf der Nord- oder Südhalbkugel der Erde befindet. Durch die Auswertung dieser Daten kann dann der Nutzer mit gezielter Werbung angesprochen werden.

Die Erfindung geht aber noch einen Schritt weiter und berücksichtigt bei der Steuerung von Werbung noch die genannten dritten Daten, die Angaben über die Person des Nutzers, also personenbezogene Angaben wie etwa Alter und Geschlecht des Nutzers, enthalten. Solche Daten werden üblicherweise von Diensteanbietern (Service Provider) zum Zwecke der Nutzerverwaltung, insbesondere zur Rechnungsstellung, erfasst. In diesem Zusammenhang ist als typischer Dienst ein Email-Dienst zu nennen, wie ihn auch die Anmelderin unter der URL http://freemail.de anbietet. Diese personenbezogenen Daten (wie z.B. Alter oder Geschlecht) werden vom Diensteanbieter Offline erhoben und/oder Online bei der Registrierung abgefragt. Es war bislang nicht bekannt, auch diese Art von Daten zum Zwecke der Steuerung von Werbung auszuwerten und mit weiteren Online und/oder Offline erfassten Angaben (erste und/oder zweite Daten) zu kombinieren. Der Erfindung liegt die Erkenntnis zu Grunde, dass diese Daten auch soziodemografische Fakten repräsentieren, mit deren Hilfe eine zielorientierte Werbung wesentlich verbessert werden kann, wenn man diese Daten zusätzlich in die Auswertung der zuvor genannten ersten und/oder zweiten Daten (Online-Zugriffsdaten und/oder Befragungsdaten) einfließen lässt.

Es werden nun hier ein automatisch ablaufendes Verfahren und ein danach arbeitendes System vorgeschlagen, die neue und qualitativ hochwertige Steuerungsdaten liefern, die z.B. von einem AdServer verwendet werden können. Dabei werden die personenbezogenen Daten nicht unter der generischen Benutzer-Kennungen verarbeitet, die eine Benutzerverwaltung (z.B. die Benutzer-Verwaltung eines Email-Dienstes) verwendet, sondern unter einer Nutzer-Identität (UID), die von dem hier vorgeschlagenen System eigens zum Zwecke der Steuerung von Werbung erzeugt wird, vorzugsweise per Zufallsgenerator als anonymer Code erzeugt wird, um eine Rückführung der Daten auf einzelne Personen auszuschließen. Dieser anonyme Code wird z.B. in Form eines Cookies auf dem PC des Nutzers abgelegt, über den der Nutzer auf das Informationsnetzwerk zugreift. Bei einem späteren Zugriff des Nutzers werden der anonyme Code und das ihm zugeordnete Nutzerprofil erkannt und für die Zielsteuerung der Werbung eingesetzt.

Zudem werden erfindungsgemäß zumindest die für jeden Nutzer extrahierten Steuerungsdaten in einem Nutzerprofil unter der zugeordneten Nutzer-Identität abgespeichert werden. In diesem Zusammenhang ergibt sich ein besonderer Vorteil, wenn die extrahierten Steuerungsdaten anonymisiert verwendet werden, indem für jeden Nutzer die Steuerungsdaten zwar jeweils unter der zugehörigen Nutzer-Identität verwaltet werden, aber ohne Bezugnahme auf den Namen der Person des Nutzers verwaltet werden.

Weitere Vorteile ergeben sich aus den Unteransprüchen:
Demnach ist es vorteilhaft, wenn außerdem noch die erstellten Nutzer-Profile miteinander verglichen werden und mittels vorgebbarer Prüfkriterien auf Vollständigkeit und Gemeinsamkeit der Daten geprüft werden. In diesem Zusammenhang ergibt sich ein besonderer Vorteil, wenn ein unvollständiges Nutzerprofil, das mit einem anderen Nutzerprofil eine durch die Prüfkriterien bestimmte ausreichende Gemeinsamkeit aufweist, mittels der Daten des anderen Nutzerprofils vervollständigt wird.

Zudem ist es vorteilhaft, wenn aus den Nutzerprofilen Gruppendaten extrahiert und zu einem Gruppen-Profil zusammengeführt, wobei die den Nutzern zugeordneten Nutzer-Identitäten verworfen werden. Das einzelne Nutzerprofil selbst wird vorzugsweise nicht verworfen, sondern beibehalten.

Mit anderen Worten: Es wird jedem Nutzer eine Nutzer-Identität zugeordnet und für jeden Nutzer werden erste Daten erfasst, die Angaben über sein Zugriffsverhalten auf die Informationen enthalten. Diese ersten Daten sind vorzugsweise sog. LogFile-Daten. Die Nutzer-Identität wird dem Nutzer anonym zugeordnet, d.h. dass dort die erfassten Daten lediglich unter einer Identität in Form eines anonymen Codes ohne konkrete Beziehung zur Person des Nutzers verwaltet und verarbeitet werden. Außerdem werden für den jeweiligen Nutzer zweite Daten erfasst, die Angaben über sein Interesse an der Art von Informationen enthalten. Diese zweiten Daten sind vorzugsweise Daten, die aus einer Nutzer-Befragung ermittelt werden. Dann werden noch die ersten und/oder zweiten Daten durch dritte Daten ergänzt, die Angaben über die Person des jeweiligen Nutzers enthalten. Diese Angaben sind also personenbezogene Daten, d.h. personenspezifische Merkmale, wie z.B. Alter oder Geschlecht. Danach werden aus den Daten für den jeweiligen Nutzer Steuerungsdaten ermittelt und an eine Steuervorrichtung zur Steuerung der Werbung übermittelt.

Durch diese hier vorgeschlagene Kombination und Auswertung verschiedenartiger Daten aus mehreren Datenquellen wird eine sehr treffgenaue Steuerung von Online-Werbung erreicht. Dabei kann auch auf Daten zurückgegriffen werden, die herkömmlicherweise bereits für andere Zwecke erfasst werden oder für bestimmte Dienste erhoben werden. In diesem Zusammenhang ist besonders die Kombination der ersten Daten, welche aus den sog. LogFiles stammen und z.B. die IP-Adressen der zugreifenden Rechner und die Zugriffzeiten angeben, mit den dritten Daten zu nennen, welche Nutzerdaten aus einer anderen Anwendung sind und z.B. aus der Nutzerdatenbank eines Email-Providers stammen.

Auch wenn mit diesen Maßnahmen bereits die Reichweite von Online-Werbung deutlich erhöht wird, wäre es wünschenswert, noch weitere besonders gestaltete Ausführungen der Erfindung zu haben, mit denen die Reichweite noch mehr erhöht bzw. verlängert werden kann. Das soll in einem besonderen Maße auch dadurch erreicht werden, dass die Online-Werbung ausgehend von einer ersten Internet-Plattform auf mindestens eine weitere Internet-Plattform erstreckt wird, die ein größeres Reichweitenpotential hat.

Deshalb wird das erfindungsgemäße Verfahren bevorzugt weitergebildet für die ReichweitenverLängerung der Online-Werbung von einer ersten Internet-Plattform, die eine erste Nutzerschaft mit einer ersten Reichweite aufweist, auf eine zweite Internet-Plattform, die eine zweite Nutzerschaft mit einer zweiten, größeren Reichweite aufweist, indem das Verfahren mit folgenden Schritten versehen wird:
- für die erste Nutzerschaft werden erste und/oder zweite Daten erfasst, die Angaben über das Nutzer-Zugriffsverhalten bzw. Angaben über das Nutzer-Interesse bezüglich Online-Informationen enthalten, und es werden dritte Daten erfasst, die personenbezogene Angaben über die jeweiligen Nutzer enthalten;
- aus diesen für die erste Nutzerschaft erfassten Daten werden erste Steuerungsdaten für die Online-Werbung auf der ersten Internet-Plattform ermittelt;
- ein durch diese Online-Werbung auf der ersten Internet-Plattform erzieltes erstes Werbevolumen wird ermittelt und mit einem geplanten Werbevolumen verglichen;
- wenn das erste Werbevolumen kleiner als das geplante Werbevolumen ist, werden aus den für die erste Nutzerschaft erfassten ersten und/oder zweiten Daten zweite Steuerungsdaten für die Online-Werbung auf der zweiten Internet-Plattform ermittelt, wobei auch für die zweite Nutzerschaft die dritten Daten, die personenbezogene Angaben über die jeweiligen Nutzer enthalten, erfasst werden, und wobei für beide Nutzerschaften Profile ermittelt werden, die Gemeinsamkeiten und/oder Unterschiede angeben, um die Online-Werbung auf der zweiten Internet-Plattform auf das Profil der ersten Nutzerschaft abzustimmen.

Damit kann die Reichweite eines evtl. zu kleinen Medienangebots (erste Plattform) auf mindestens ein weiteres Medienangebot (zweite Plattform usw.) mit größerer Reichweite transparent verlängert werden. "Transparent" bedeutet in diesem Zusammenhang, dass die Online-Werbung auf dem ersten Medienangebot eine bestimmte Zielgruppe anspricht und nun durchlässig für diese Zielgruppe auf ein größeres Medienangebot erweitert wird. Beispielsweise wird Werbung für weibliche Jugendliche bzw. Junge Erwachsene im Alter von 13-19 Jahren auf einem ersten Medienangebot einer bekannten Jugendzeitschrift und der entsprechenden Internet-Website www.bravo.de geschaltet. Mit der Website erreicht man mehrere Hundertausend Nutzerinnen, die dieser Zielgruppe angehören. Man möchte aber die Reichweite deutlich erweitern. Mit Hilfe der vorliegenden Erfindung kann nun für dieselbe Zielgruppe die Werbung auf ein weiteres Medienangebot, z.B. auf die Website eines großen Online-Portals www.web.de, erweitert werden, so dass mehrere Millionen Nutzerinnen erreicht werden. Die Reichweitenerweiterung erfolgt dabei konvergent, so dass beide Medienangebote quasi miteinander zu einem großen Medienangebot verschmelzen. Etwaige Überlappung der Nutzerschaften und evtl. daraus resultierende Redundanzen können vermieden werden. Somit werden dieselben Nutzerinnen nicht auf beiden Medienangeboten gleichermaßen beworben, ohne dass ein Mehrwert entstehen könnte, weil nämlich die erfindungsgemäße Reichweitenerweiterung die Nutzerschaften der Medienangebote analysiert sowie dafür Profile erstellt und diese aufeinander abstimmt. Daher ist diese transparente und konvergente Reichweitenverlängerung besonders interessant für Anwendungen im Bereich crossmedialer Vermarktung, bei denen dieselben Waren und/oder Dienstleistungen gleichzeitig auf mehreren verschiedenen Medienangeboten vermarktet werden sollen.

Auch diese besondere Ausführung der Erfindung wird in der nachfolgenden Beschreibung von erfindungsgemäßen Ausführungsbeispielen noch stärker verdeutlicht.

Zuvor sollen zum besseren Verständnis noch einige der hier verwendeten Begriffe erläutert werden:
Unter Internet-Plattform wird hier jede Art von internetgestützem Medienangebot bzw. Online-Angebot, insbesondere Website oder Webauftritt, verstanden. Deshalb wird nachfolgend auch der Kurzbegriff "Angebot" verwendet.

Als Zielgruppe wird eine mehr oder weniger genau bestimmte Menge von Marktteilnehmern, an die sich solch ein Angebot mit seinen beworbenen Waren und Dienstleistungen richtet. Die Definition einer Zielgruppe erfolgt insbesondere soziodemografische Merkmale (wie z.B. Alter, Familienstand, verfügbares Haushaltseinkommen, geografisches Gebiet etc.), kann aber auch psychografische Merkmale (wie z.B. Einstellungen und Werte mit den daraus resultierendem Konsumverhalten, Vorlieben, Statusbewusstsein, Offenheit, ästhetisches Empfinden etc.) berücksichtigen.

Mit Reichweite wird die Menge einer Zielgruppe bezeichnet, die mit Hilfe des Marketings erreicht wird. Es ist ein Maß für die Verbreitung bzw. Durchdringung der jeweiligen Werbung innerhalb der angesprochenen Zielgruppe. Im Online-Marketing werden als Kriterien für die effektive Reichweite z.B. sog. AdImpressions oder AdViews ermittelt. Ebenso können sog-PageImpressions oder PageViews ermittelt werden.

AdImpressions, kurz AI, werden gemessen, wenn einem Nutzer (User) ein Banner präsentiert wird während er sich auf einer WebSite aufhält. Man spricht dann von einem Sichtkontakt, d.h. einem AdView. Gemessen wird die Stärke einer Kampagne in der Anzahl solcher AdViews, die von einem AdServer nach bestimmten Kriterien geschaltet werden. Bei leistungsstärkeren Medien sind in einem bestimmten Zeitraum mehr AdViews als in anderen schaltbar.

Von PageImpression, kurz PI, spricht man, wenn es im Internet zwischen einem User und einer Site/Page zu einem Sichtkontakt kommt. Über das Prinzip von Links können in Hinblick auf andere Sites weitere PI durchgeführt werden, wobei der Browser den optischen Rahmen für diesen Sichtkontakt bereitstellt. Das Verhältnis zwischen PI und AI stellt eine interessante Maßzahl für die Führung einer Werbekampagne dar. Im Idealfall geht mit einem PI ein AI einher, bedeutet also, dass jedes Mal, wenn ein User eine Site/Page besichtigt, ihm gleichzeitig ein Werbebanner angezeigt wird.

### Figuren-Beschreibung

Die Erfindung und die sich daraus ergebenden Vorteile werden nun näher beschrieben anhand der beiliegenden Zeichnungen. Die Zeichnungen geben folgende schematischen Darstellungen wieder:
- Fig. 1: zeigt den prinzipiellen Aufbau eines Informationsnetzwerkes in Form des WorldWideWebs, in das das erfindungsgemäße System integriert ist;
- Fig. 2: zeigt eine Anwendung eines Internet-Dienstes in Form der Benutzeroberfläche eines Email-Dienstes, bei der ein Werbebanner gemäß dem erfindungsgemäßen Verfahren eingeblendet ist;
- Fig. 3: zeigt in Form eines Blockdiagramms den Aufbau eines Systems zur Ausführung des Verfahrens;
- Fig. 4: zeigt in Tabellenform eine beispielhafte Datensammlung mit den vom Verfahren ausgewerteten Daten;
- Fig. 5: zeigt in Form eines Flussdiagramms den Ablauf des Verfahrens;
- Fig. 6: zeigt ein besonderes Ausführungsbeispiel zur Reichweitenverlängerung in Form einer schematischen Darstellung einer Anordnung von zwei Systemen zur Steuerung von Online-Werbung auf zwei Internet-Plattformern und einer zwischengeschalteten Vorrichtung (Kommunikationseinheit) zur Reichweitenverlängerung von der kleineren auf die größere Plattform;
- Fig. 7: zeigt in Form eines Flussdiagramms den Ablauf des Verfahrens zur Reichweitenverlängerung;
- Fig. 8a/b: zeigen diese Anordnung bzw. diesen Verfahrensablauf in einer alternativen Darstellungsform; und
- Fig. 9: zeigt mehr im Detail den Aufbau einer bevorzugten Variante für das System zur Steuerung der Online-Werbung.

### Beschreibung bevorzugter Äusführungsbeispiele

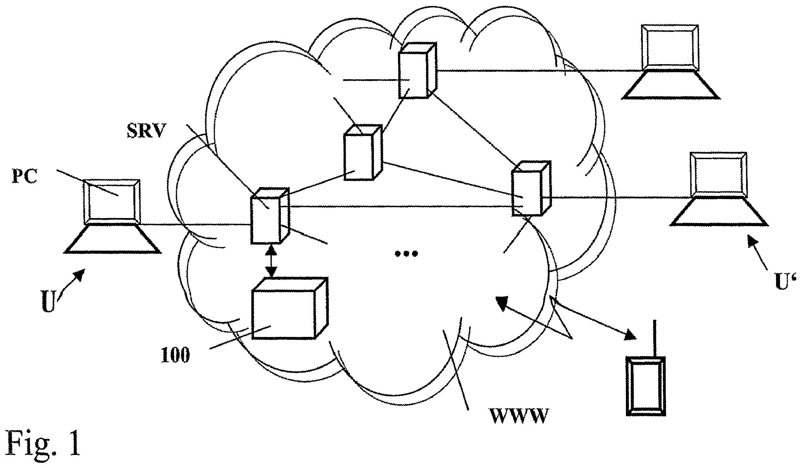

In der Figur 1 wird schematisch der Aufbau eines Informationsnetzwerkes WWW gezeigt, das hier die Form des im Internet etablierten Hyper-Media-Systems "WorldWideWeb" hat. Im WWW wird eine einheitliche Oberfläche für die Darstellung von Informationen und Schnittstellen für verschiedene Internetdienste zur Verfügung gestellt. Das WWW ist wegen seiner Bedienfreundlichkeit und seiner Multimediafähigkeit das beliebteste Zugriffsmedium für Informationen.

In der Figur 1 sind beispielhaft zwei Nutzer U und U' dargestellt, die über ihren jeweiligen Personal-Computer PC per Browser im WWW surfen und dort die sie interessierenden Informationen abrufen. Es können auch mobile Endgeräte mit Browserfunktion genutzt werden. Als Informationen bietet das WWW eine große Anzahl von miteinander verknüpften Dokumenten in Form von HTML-Seiten an. Die Hyper-Links ermöglichen die Verknüpfung zwischen den Informationsdokumenten. Dies sind Verweise, die in den HTML-Seiten eingebaut werden. Es sind beispielsweise Textdokumente, Grafiken, Audiodaten und Videoclips in HTML-Seiten eingebaut. Die Informationen werden von Servern bereitgestellt, von denen in der Figur 1 beispielhaft ein Server SRV dargestellt ist. Als mögliche Anwendung eines solchen Servers wird auf das von der Anmelderin betriebene Portal www.web.de verwiesen.

Im WWW finden die Nutzer also die unterschiedlichsten Webauftritte (Websites) und Internetseiten (Webpages) mit aller Art von Informationen, wie z.B. auch Katalogseiten, Internetseiten von Auskunftsdiensten, Reisediensten, Suchmaschinenergebnissen etc.. Dabei wird oft auch zusätzlich zur eigentlichen Information Werbung, insbesondere in Form von Werbebannern, dargestellt. Die eigentliche Information befindet sich vorzugsweise auf sog. ContentServern. Auch die Werbebanner können dort oder auf einem separaten Server, dem sog. AdServer, abgelegt sein, wobei der AdServer das Erscheinen der Werbung gezielt steuert.

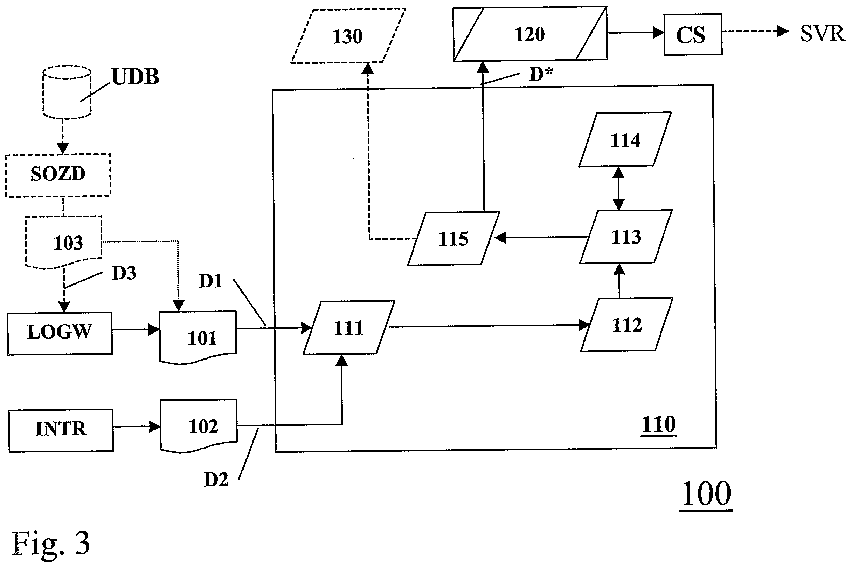

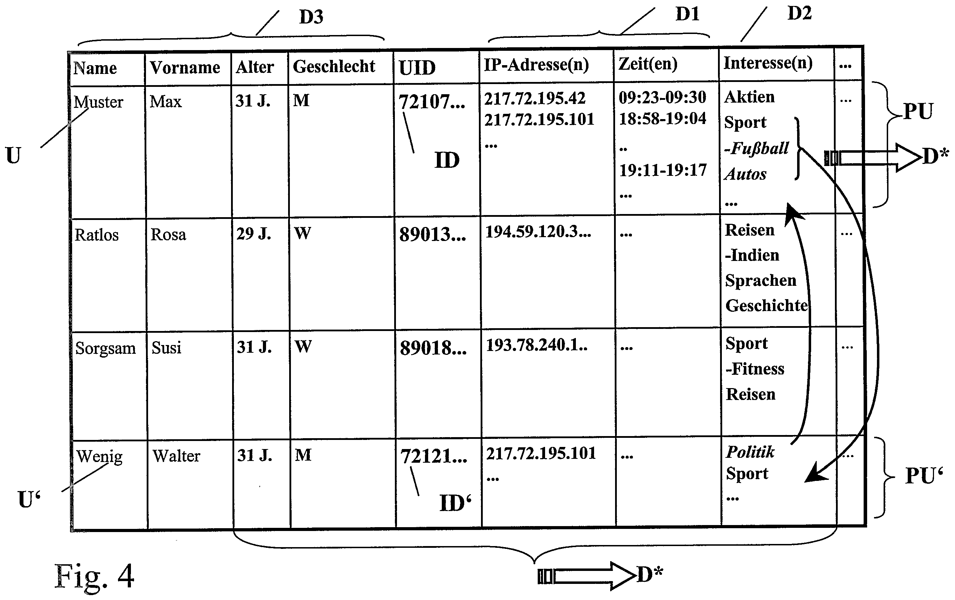

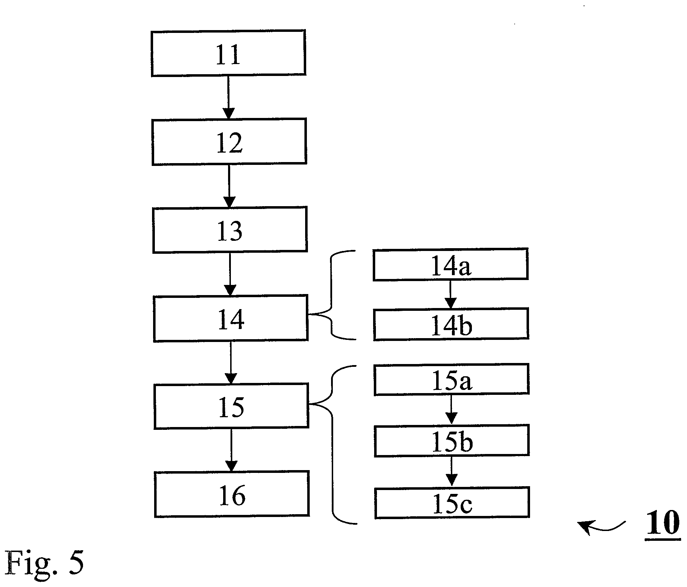

In der Figur 1 ist dargestellt, wie an einem Server SRV nun ein erfindungsgemäß eingerichtetes System 100 zur Steuerung von Werbung angeschlossen ist. Der Aufbau des Systems selbst wird in der Figur 3 gezeigt. Das Verfahren, nach dem das System arbeitet, wird anhand der Figuren 4 und 5 verdeutlicht.

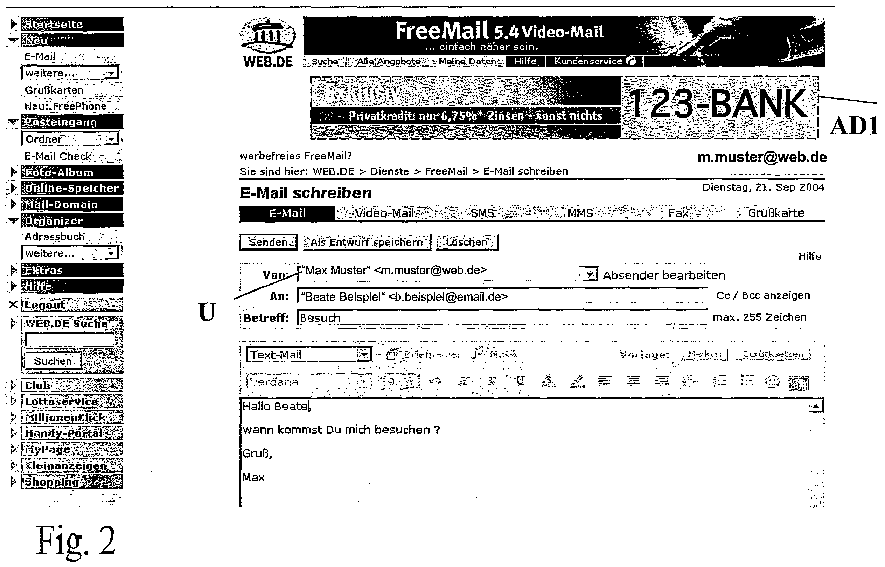

Bevor die genaue Beschreibung dieser Figuren folgt, wird hier zunächst auf die Figur 2 eingegangen, die eine vom Nutzer U konkret benutze Anwendung eines Internet-Dienstes, nämlich des eingangs genannten Email-Dienstes www.freemail.de zeigt. Die Figur 2 soll auch das Einblenden eines Werbebanners AD1 entsprechend der Erfindung verdeutlichen:
In dem gezeigten Beispiel heißt der Nutzer "Max Muster" und hat ein Email-Nutzer-Konto bei dem Dienst "FreeMail" eingerichtet. Seine Email-Adresse lautet m.muster@web.de. Sobald Max Muster die Website des Email-Dienstes "FreeMail" über einen Browser besucht und sich dort eingeloggt, sieht er die in der Figur 2 dargestellte Anwendung mit eigentlichen Bedien- und Informationsfeldern. Dazu gehören im Wesentlichen die Menüleiste (links), die Kopfleiste mit dem Logo des Diensteanbieter (oben, rechts) und der Eingabe- und Lesebereich für Emails (Mitte bis unten, rechts). Außerdem sieht der Nutzer U noch ein Werbefeld, in das der Diensteanbieter Werbebanner, hier das Banner AD1, einblendet. Dabei erfolgt die Einblendung automatisch durch das erfindungsgemäße System und entsprechend dem vorgeschlagenen Verfahren zur Steuerung der Werbung.

In dem hier gezeigten Beispiel bewirken die Datenauswertung und Steuerung der Werbung nun, dass dem Nutzer "Max Muster" ein Werbebanner AD1 mit Werbung für ein Geldinstitut namens "123 Bank" angezeigt wird. Durch die Datenauswertung innerhalb des erfindungsgemäßen Verfahrens wurde nämlich ein Nutzerprofil erstellt, wonach der Nutzer U ein besonderes Interesse an Finanzdienstleistungen, insbesondere an Informationen über Aktien, hat (vergl. Fig. 4). Deshalb werden vom System solche Steuerungsdaten für den AdServer erzeugt, die zielgenau die Einblendung des Banners AD1 bewirken. Diese konkret auf den Nutzer zugeschnittene Werbung ist sehr effizient, weil sie auch auf den soziodemografischen Hintergrund des Nutzers (Daten D3) und die von ihm erfragten Interessen (Daten D2) abgestellt ist.

Zur weiteren Verdeutlichung der Erfindung werden nun im Detail der Ablauf des Verfahrens und der Aufbau des danach eingerichteten Systems anhand der Figuren 3-5 beschrieben:
In der Figur 3 ist als bevorzugtes Ausführungsbeispiel ein System 100 dargestellt, das mehrere Systemkomponenten hat, wie eine Datenverarbeitungsvorrichtung 110, die einem als Profiler eingerichteten Rechner entspricht, sowie eine damit verbundene Steuervorrichtung 120, die einem als AdServer eingerichteten Rechner entspricht, der einen als ContentServer CS eingerichteten Rechner steuert und mit Werbeformen beliefert, um nutzerabhängig und zielgerichtet die Werbung in Form von Werbebannern in die dem Nutzer angezeigten Webpages zu integrieren. Das geschieht ggfs. auch durch Steuerung weiterer Server (vergl. Fig. 1 "SRV")

Zur Steuerung der Werbung wertet zunächst die Datenverarbeitungsvorrichtung (Profiler) 110 verschiedene Eingangsdaten D1, D2 und D3 aus und erstellt für den jeweiligen Nutzer ein Nutzerprofil, das in Form von Steuerungsdaten D* für die Steuervorrichtung (AdServer bzw. AdServerControl) 120 aufbereitet wird. Die Nutzerprofile werden anonym verwaltet. Dazu gibt der Profiler 110 für jeden Nutzer eine Nutzerkennung (Nutzer-Identität UID) vor, zu der dann auch das jeweilige Nutzerprofil zugeordnet wird. Die UID ist ein per Pseudo-Zufallsgenerator erzeugter Code (anonyme Kennung), der anonym ist. Dabei werden Bezugnahmen wie Name und Vorname des Benutzers verworfen, so dass im Profiler 110 selbst alle nutzerspezifischen Daten nur unter der jeweiligen UID behandelt werden, die für externe Systeme eine anonyme Kennung darstellt. Somit kann auch nicht anhand der vom Profiler erzeugten Steuerungsdaten D* auf die Person des Nutzers zurückgeschlossen werden. Die Person des Nutzers bleibt anonym, dennoch erlaubt das Nutzerprofil eine zielgenaue und auf den jeweiligen Nutzer zugeschnittene Steuerung der Werbung.

Damit der Profiler 110 besonders gute Nutzerprofile erstellen kann, wertet er verschiedenartige Eingangsdaten D1, D2 und D3 aus, die aus den folgenden Datenquellen gewonnen werden:
Eine erste Vorrichtung LOGW, die einem sog. Logwriter entspricht und die Online-Zugriffe der Nutzer protokolliert, erfasst erste Datensätze 101 in Form von sog. LogFiles. Die darin enthaltenen Daten D1 umfassen im Wesentlichen Angaben über das Zugriffsverhalten der einzelnen Nutzer, insbesondere Daten wie Zugriffszeiten, URL, Seitenzuordnung etc. (s. auch Fig. 4).

Eine zweite Vorrichtung INTR, die in diesem Beispiel einer Online-Abfrage-Einrichtung entspricht, erfasst Befragungsdatensätze 102 mit Angaben über die Nutzer-Interessen. Es werden also per Online-Fragebogen Daten D2 erfasst und für den Profiler aufbereitet, die ausgewählte bevorzugte Themen-Kategorien aus verschiedenen Interessensgebieten wiedergeben (s. auch Fig. 4). Ein Nutzer U interessiert sich z.B. für Aktien, Sport, insbesondere Fußball, und für Autos. Ein anderer Nutzer interessiert sich für Reisen, insbesondere für Reisen nach Indien, und für Sprachen sowie Geschichte usw.

Neben diesen beiden Eingangsdaten D1 und D2 werden noch andere Daten D3 ausgewertet, die personenbezogene Daten im engeren Sinne sind. Diese Daten D3 stammen von der Nutzerdatenbank UDB eines Diensteanbieter-Systems SOZD und werden als Datensätze 103 zur Verfügung gestellt, die eigentlich für die Nutzer-Verwaltung des angebotenen Dienstes (z.B. Email-Dienst) verwendet werden. Im Wesentlichen handelt es sich bei diesen Daten D3 um Angaben über den Namen (ggfs. mit Vornamen), Alter und Geschlecht des jeweiligen Dienste-Nutzers. Im Rahmen des hier vorgeschlagenen Verfahrens und Systems werden zumindest die Daten bezüglich Alter, Geschlecht und Postleitzahl verarbeitet. Weitere Daten können hinzukommmen. Die Anzahl dieser Dienste-Nutzer (d.h. alle Email user) ist dabei kleiner als die Anzahl aller hier betrachteten WWW-Nutzer. Dennoch können durch eine Berücksichtigung und Auswertung der Daten D3 sehr wertvolle Erkenntnisse gewonnen werden, die die Zielgenauigkeit der Werbung auch für alle WWW-Nutzer deutlich erhöht. Das wird im Folgenden mit Verweis auf die Figuren 3 bis 5 noch eingehender beschrieben:
Der Profiler 110 verarbeitet die Daten D1 bis D3 nach dem in der Fig. 5 dargestellten Verfahren 10, wobei er in einem ersten Schritt 11 zunächst für jeden Nutzer eine Nutzerkennung vergibt (s. Fig.4 das Feld "UID"). In einem zweiten Schritt 12 werden die ersten Daten D1 erfasst, also die aus den LogFiles gewonnen Zugriffdaten, wie z.B. Zugriffszeiten, URL, Seitenzuordnung oder auch IP-Adresse etc.. In einem nächsten Schritt 13 werden die zweiten Daten D2 erfasst, also die oben genannten Befragungsdaten, die die vom Nutzer bevorzugten Interessen angeben. Als dritten Schritt 14 werden die Daten D1 durch die oben genannten dritten Daten D3 ergänzt, soweit diese Daten, insbesondere Alter und Geschlecht, vorhanden sind. Im gezeigten Beispiel werden die personenbezogenen Daten D3 in die LogFiles der Nutzer eingearbeitet und sind somit in den Daten D1 mitberücksichtigt.

Alle Eingangsdaten durchlaufen dann innerhalb des Profilers 110 eine Datenaufbereitungsstufe 111, die in Form eines LogProzessors ausgebildet ist. Dort werden die Eingangsdaten gefiltert und ggfs. entschlüsselt. Anschließend erfolgt in einer Stufe 112 (auch PFF-Komponente genannt) eine Voraggregation und ggfs. eine weitere Filterung der Daten. In einer nachgeschalteten Stufe 113 und im Zusammenspiel mit der Kernkomponente des Profilers, nämlich mit der Profilbildungstufe 114, werden daraus Daten in einem komprimierten Datenformat, nämlich im sog. TAB delimited ASCII-Format, erzeugt, die bereits die gewünschten Nutzerprofile wiedergeben. Die Nutzerprofile werden dann über eine Profilaufbereitungsstufe 115 (auch DB_Builder genannt) in Form von Steuerungsdaten D* an den AdServer 120 übergeben. Außerdem können die Daten auch noch an eine Analysierungsstufe 130 (auch Analyse-DB genannt) weitergegeben werden, die für Systemwartungszwecke und Optimierungszwecke den Profilierungsprozess analysiert und ggfs. dokumentiert.

Das Verfahren 10 und das danach arbeitende System 110 sind weiterhin so ausgestaltet, dass die erstellten Nutzerprofile miteinander verglichen werden und mittels vorgebbarer Prüfkriterien auf Vollständigkeit und Gemeinsamkeit der Daten geprüft werden (Schritt 15b). Dadurch werden evtl. unvollständige Nutzerprofile erkannt und dann mit Daten aus vollständigen Nutzerprofilen ergänzt. Wenn also ein Nutzerprofil, das mit einem anderen Nutzerprofils eine durch die Prüfkriterien bestimmte ausreichende Gemeinsamkeit aufweist, unvollständig ist, dann wird es mit Daten des anderen Nutzerprofils vervollständigt (Schritt 15c). Das hat den großen Vorteil, dass auch bei einer evtl. geringen Datenbasis eine qualitativ hochgenaue Zielführung der Werbung gelingt. In diesem Zusammenhang sind besonders die soziodemografischen Daten D3 zu sehen, für die einer eher kleine Datenbasis zu erwarten ist - denn nicht alle WWW-Nutzer sind auch gleichzeitig Dienste-Nutzer (hier z.B. Nutzer des Email-Dienstes).

Anhand der Figur 4 wird beispielhaft gezeigt, wie einzelne unvollständige Nutzerprofile sich ergänzen können:
Für den Nutzer U wurde das Nutzerprofil PU berechnet, aus dem u.a. hervorgeht, dass er 31 Jahre alt und männlich ist sowie Interesse an Aktien, an Sport, insbesondere Fußball, und an Autos hat. Durch Vergleich mit anderen Profilen, erkennt das System, dass es ein ähnliches Nutzerprofil PU' gibt, das für einen anderen Nutzer U' berechnet wurde. Auch dieser Nutzer U' ist 31 Jahre alt und männlich. Deshalb vergleicht das System die beiden Profile PU und PU' noch eingehender und stellt fest, dass es zumindest ein gemeinsames Interesse gibt, nämlich "Sport". Das System macht nun einen Datenabgleich unter den Daten D2, wodurch für den Nutzer U nun auch angenommen wird, dass er genauso wie der Nutzer U' Interesse an Politik hat. Im umgekehrten Fall wird dem Nutzer U' zugerechnet, dass er sich gleichermaßen wie der Nutzer U für Fußball und Autos interessiert. Durch diese Maßnahmen wurden beide Profile PU und PU' ergänzt und verbessert, was wiederum die Möglichkeiten für genaue Zielansprachen der Nutzer U und U' erweitert. Aus dem jeweiligen Profil werden dann unter der entsprechenden Kennung UID Steuerungsdaten D* für den AdServer erzeugt.

Wie man aus der Figur 4 ersehen kann, bietet bereits eine relativ kleine Datenbasis eine große Vielfalt an Möglichkeiten, die Nutzerprofile für die Steuerung von Werbung effektiv auszuwerten. Beispielsweise kann über die Daten D1 auch festgestellt werden, wann der Nutzer besonders aufnahmebereit für welches Interessengebiet ist. Am Beispiel des Nutzers U sieht man, dass er gern vormittags Websites im Themenbereich Aktien besucht und erst abends sich über die Themen Sport und Autos informiert. Also wird das System für diesen Nutzer am Vormittag bevorzugt Werbung über Finanzdienste u.ä. schalten (siehe in Fig. 2 das Banner AD1). Gegen Abend wird das System aber bevorzugt Werbung über Sport und/oder Automobile an den Nutzer U ausliefern. Durch diese und ähnliche Maßnahmen wird die Affinität für Online-Werbung noch weiter erhöht.

Das hier beschriebene Verfahren kann auch dahingehend modifiziert werden, dass es aus den Nutzerprofilen Gruppendaten extrahiert und zu einem Gruppen-Profil zusammengeführt, wobei die den Nutzern zugeordneten Nutzer-Identitäten verworfen werden. Somit wird die Werbung weniger auf einzelne Nutzer hin ausgerichtet denn auf typische Nutzergruppen, wie z.B. auf die Gruppe Junger Singles, auf Familien, auf Sportler usw. Diese Art von zielgesteuerter Werbung ist besonders sinnvoll, wenn gruppenspezifische Ereignisse und Angebote beworben werden sollen (Single-Parties, Familientage usw.). Dabei kann das System die Werbung noch durch zusätzliche Angaben über die jeweilige Gruppe ergänzen, wie z.B. die Anzahl der Gruppenmitglieder: "Single-Party am 22. Dez. in Treffdorf - 212 Singles aus Deiner Region sind eingeladen - Komm auch Du". In allen Fällen bleibt der einzelne Nutzer anonym, wird aber dennoch zielgerichtet angesprochen.

### Weitere Beschreibung für die bevorzugte Realisierungen der Erfindung

Zu der obigen Beschreibung des Verfahren und Systems zur gezielten Steuerung von Werbung wird nachfolgend noch folgendes ergänzend hinzugefügt:
Mit der Erfindung wird eine bessere Platzierung von Werbung aller Art in Informationsnetzwerken erreicht. Als ein bevorzugtes Anwendungsbeispiel ist hier die Werbung über Banner im WorldWideWeb zu nennen.

Dazu werden die Daten über den Nutzer (User) anonym erfasst werden und bei der Platzierung der Banner berücksichtigt. Für die Veredelung der vorhandenen Daten wird ein Profiler eingesetzt, der aufgrund von Detailwissen über einzelne User erlaubt, Rückschlüsse auf die Gesamtuserschaft zu ziehen. Die Bereitstellung der Steuerungsdaten erfolgt über eine API (Application Programming Interface) im Adserver und wird vorzugsweise komplett in bestehende Infrastrukturen eingebettet. Insbesondere wird eine Anbindung von externen Komponenten an den Adserver (Callout) realisiert und es werden die notwendigen Eingabedaten (Input-Parameter) als Logfile zur Verfügung gestellt. Die eigentlichen Eingabedaten können also entweder direkt aus dem Logfile kommen oder auch aus einer aus dem LogFile speziell aufbereiteten Datei.

Für die Realisierung des Systems sind folgende Hauptkomponenten und -Funktionen vorgesehen:

| Komponenten | Siehe | Funktion(en) |
|---|---|---|
| Content-Server | Fig. 4 "CS" | Auslieferung der Informationen (Content) - im Speziellen zur Parametrierung des SZM-Tags |
| Einheit SZM-Box | Fig. 3 Teil in "LOGW" | Zählung von Pageimpressions nach dem AGOF-Standard |
| Einheit Loghost | Fig. 3 "101" | Abgreifen des Logstroms von der SZM-Box und Schreiben in Dateien |
| Einheit Logprozessor | Fig. 3 "111" | Transformation der Logfiles des Loghosts spez. zum Entschlüsseln von benutzerspezifischen Daten (Alter, Geschlecht, ...) |
| PFF-Komponente | Fig. 3 "112" | Aufbereiten und Filtern von Logdaten, die vom Logprozessor bereitgestellt werden(Parsing, Filtering, Feeding) |
| Einheit Profilerstufe | Fig. 3 "114" | Profilbildung - stellt die Profile dem DB-Builder zur Verfügung |
| Einheit DB-Builder | Fig. 3 "115" | Bildung von Profil-DB's aus den Daten des Profilers - stellt die DB dem Adserver zur Verfügung |
| Adserver | Fig. 3 "120" | Server zur Auslieferung von Werbeformen - greift auf die vom DB-Builder generierten Profil-DB's zu |

### Zur Funktion des ContentServers:

Um alle notwendigen Informationen für die externen Komponenten zur Verfügung zu stellen, wird das herkömmliche Logfile der SZM-Box um verschiedene Daten erweitert (Allgemeine Informationen zur SZM-Box und SZM-Tags findet man unter http://www.infonline.de/support/szm.htm). Zum einen wird die im Cookie vorhandene Nutzerkennung (UID) an den SZM-Box-Aufruf mit übertragen. Dazu wird der Adclient bei der Generierung des SZM-Tags diese Information aus dem Cookie auslesen und als Parameter an den Aufruf anhängen. Dies wird bei der anstehenden Überarbeitung des Adclients mit erledigt.

Zum anderen werden die Userdaten beim Einloggen eines Users in einen Dienst (wie z.B. www.freemail.de) einmalig als Parameter an das SZM-Tag angefügt. Da es sich hier um persönliche Daten des Users handelt, werden diese dazu verschlüsselt und sind dadurch im Logfile nur verschlüsselt vorhanden. Damit der dafür verwendete Algorithmus keiner externern Instituiton, insbesondere Werbepartnern, mitgeteilt werden kann und um die Daten vor Missbrauch zu schützen, wird vor der Übergabe der Logfiles an die externe(n) Komponente(n) eine Entschlüsselung der Daten durchgeführt. Dabei werden die Daten z.B.
&pg=m&pa=32&pp=D_76131&pn=3A
mit dem COPS-Classic Befehl crypt symetrisch verschlüsselt und als ein weiteres Key-Value-Paar an die Variable
c_agof_var angehängt.
Hinweis: "COPS" ist eine von der Firma Cinetic (www.cinectic.de) entwickelte CM-Technologie eines "Corporate Online Publishing System", bei der grundsätzlich alle Informationen in Datenbanken verkapselt werden. Das gibt dem Anwender die Möglichkeit, den erstellten Content vielfältig zu verwenden, insbesondere den gleichen Content auf verschiedenen Plattformen (Multisite) zu verwenden, den Content selbst aber zentral an einer Stelle zu pflegen. COPS ist aber nicht nur die Plattform für reines Content Management (CM), sondern auch ein Application Server, wodurch eine hohe Skalierbarkeit und Performance erreicht wird.

Um der PFF-Komponente diese Daten in unverschlüsselter Form zur Verfügung zu stellen, wird ein Python-Programm eingesetzt, das die Logfiles parst und die Daten entschlüsselt (siehe auch unten den Abschnitt "Logprozessor").

### Zur Erfassung der Befragungsdaten:

Über den Adserver wird ein Fragebogen ausgeliefert. Die Zusammenfassung der Ergebnisse wird in den Formaten CSV, SPSS, oder Fixed-Length ASCII Format bereitgestellt.
Jede Frage bezieht sich auf einen Fragetyp, dessen Ergebnis in der Ergebnisdatei dargestellt wird. Die UID wird als Query-Parameter in der folgenden Form übergeben:
http://..../umfrage?p0=UID
Weitere Parameter können den dafür reservierten Variablen p0-p9 übergeben werden. Diese Variablen werden dann auf Fragetypen gemappt, so dass sich die UID in der Ergebnisdatei abgebildet wird.

### Zur SZM-Box:

Die SZM-Box ist eine Einheit/Komponente zur Zählung von Pageimpressions. Über den Port 9000/9001 kann der Logstrom der Box abgegriffen werden und für eigene Analysen verwendet werden. Es werden vorzugsweise zwei SZM-Boxen eingesetzt und die Verfügbarkeit beider Boxen wird über Failover abgesichert.

Für die Logstromstruktur gilt folgendes: Der Datensatztrenner ist <NEWLINE> und der Trenner der Datenfelder ist <TAB>. Die Dateien beinhalten Logdaten von einer Stunde. Der Dateiname beinhaltet Datum und die Zeit der Log-Rotation.

Hier die Beschreibung der Felder:

| Beschreibung | Format | Beispiel |
|---|---|---|
| Entry-ID | Integer | 667045 |
| Time | Time | 999526997 |
| Client-IP | xxx.xxx.xxx.xxx | 212.18.195.222 |
| Forwarded for | xxx.xxx.xxx.xxx | 212.18.195.222 |
| Cookie-Flags | N\|R [!] | R |
| Angebotsname | [angebot].ivwbox.de | spring.ivwbox.de |
| Cookie-Content | String | 3e22b68fa3b4675c0ddc7ddb8a261d 32-1089120173 |
| Parse-Code | OK\|E[1\|2\|3\|4\|5\|6\|7] | OK |
| Requested URL | URI (string) | /cgibin/ivw/CP/97;sc=freemail/cont ent&pg=m&pa=32&pp=D76131?i=62. 153.136.122&r=undefined |
| User Agent | String | Mozilla/4.0 (compatible; MSIE 6.0; Windows |
| Referrer | URL (string) | http://www.angebot.de/saarloui s/index.htm |
| Prüfsumme | String | 885cb4af80b931de257104f66ccce8e3 |

Die "Cookie-Flags" sind folgende:
N= Neuer Cookie, R = Retournierter Cookie, ! = Reload

Die Parse-Codes sind folgende:

| Parse-Code | Beschreibung |
|---|---|
| OK | OK |
| E1 | Der Request konnte nicht vollständig geparsed werden |
| E2 | Die URL entspricht nicht der geforderten Struktur |
| E3 | Der Typ des aufgerufenen Pixels entspricht nicht den Anforderungen <CP\|AP> |
| E4 | Der Cookie konnte nicht geparsed werden |
| E5 | Der Useragent im Request ist nicht gültig |
| E6 | Der Referrer im Request ist für dieses Angebot nicht gültig |
| E7 | Keine Konfiguration für diesen Host |
| E8 | Keine gültige Domain im Request |
| E9 | unbekannter Fehler |

### Auflösung "Requested Url": :

Innerhalb der *Requested Url* befindet sind neben einem sog. AGOF-Code ein variabler Anteil. Innerhalb des variablen Anteils befinden sich frei definierbare Key-Value-Pairs, die in Reihenfolge und Anzahl variieren können.

Die Syntax für die *"Requested Url"* ist folgende: /cgi-bin/ivw/CP/Web.de-AGOF-Code]; [variabler Anteil]?i=[User-IP]&r=[referrer] Der Referrer steht i.d.R. auf "undefined".

Die Syntax für *"variabler Anteil*:" ist wie folgt:
sc=[ZMOD-Code]&uq=[UID]&pa=[Alter-2stellig (1-99)]&pg=[Geschlecht]&pp=[Land(3stellig),
PLZ(5stellig)]&pn=[Nielsen-Gebiet(2stellig)

### Hier ein Beispiel für einen Logfile-Auszug:

| |
|---|
| 24815344 1090390 984 217.72.200.18 62.153.136.122 R webdessl.ivwbox.de 002c40fe02dfd7d0 OK /cgibin/ivw/CP/97; sc=freemail/content&uq=3e22b68fa3b4675c0ddc7ddb8 a261d32-1089120173&pa=32&pg=m&pp=D_76135&pn=3B?i=62.153.136.122&r=und efined Mozilla/4.0 (compatible; MSIE 6.0; Windows NT 5.0) https://freemailng9901.web.de/online/ordner/anzeigen.htm 8b37d8a1d0dcd5f4c8e4abd84d32798f |

### Zur Nutzerkennung UID:

Die Nutzerkennung (UID) kann folgende 2 Formate annehmen:
Interne Dienste:

| |
|---|
| 3e22b68fa3b4675c0ddc7ddb8a261d32-1089120173 |

Externe Dienste:

| |
|---|
| ac140269-25820-1090511593-1 |

### Zum Loghost:

Der Loghost greift den Logstrom des Logprozessors auf Port 9000/9001 ab und speichert die Daten auf Festplatte. Die Verfügbarkeit des Loghosts und der Datenbereitstellung wird durch folgende Maßnahmen gewährleistet:
- Der Ausfall einer SZM-Box und Übernahme der zweiten wird berücksichtigt, in dem die Ports beider Boxen abgehört werden
- Der Loghost überwacht sich selbst und startet sich selbst neu
- Die Statusinformationen des Loghosts werden in die NOC-Überwachung eingebunden

Die Rotation der Logs wird beim Überscheiten einer konfigurierbaren Anzahl von Logzeilen oder einer Zeitspanne gesteuert.

### Zum Logprozessor:

Der Logprozessor ist vorzugsweise ein Python-Programm und bezieht die Logdaten vom Loghost, bereinigt sie und stellt sie der PFF-Komponent zur Verfügung. Das bedeutet im Speziellen:
- Verschlüsselte Demographischen Daten (D3) wie Alter, Geschlecht usw. werden entschlüsselt
- Folgende Key-Value-Pairs werden entfernt, falls die Wertebereiche nicht eingehalten sind
   ∘ Alter: Wert zwischen 1 und 99
   ∘ Geschlecht: "m"(männlich) oder "w" (weiblich) einstellig
   ∘ PLZ: 3-stelliger Ländercode und ein 3-stelliger PLZ-Zahlencode (weitere Kombinationen werden angepasst) [a-zA-Z_]{3}[0-9]{5}
   ∘ Nielsen: Folgende Werte sind möglich (1, 2, 3A, 3B, 4, 5, 6, 7)

Der Logprozessor bezieht vom Loghost die Logdateien. Die übertragenen Dateien werden nach der Übertragung auf den Logprozessor auf dem Loghost gelöscht.

Der Loghost lagert die bereinigten Logdateien für max. n-Tage.

Über ein Mountpoint stellt der Loghost der PFF-Komponente die Logfiles zur Verfügung (s. in Fig. 3 Übergang von "101" auf "111" und "112"). Die PFF-Komponente löscht vom Loghost die verarbeiteten Dateien.

### Bereinigung der Befragungsdaten:

Die z.B. über Fragebogen erhobenen Daten D3 werden überprüft und in einer tab-delimited-ASCII-Datei mit Headern bereitgestellt.

Folgende Bereinigungen sind durchzuführen:
- NULL Werte werden mit Leerstring im Exportfile ausgewiesen
- Überzählige Tabs werden entfernt
- Der Datensatz mit der UID "$cookie.UID$" wird entfernt
- Mehrfachbefragungen werden herausgefiltert oder die PFF-Komponente überschreibt immer wieder den letzten Datensatz
- Postleitzahl PLZ und Land in getrennten Feldern
- Die 0 dient als "Nicht belegt"

### Zum DB-Builder:

Der DB-Builder erstellt aus den vom Profiler/LDAP-System erzeugten Extrakten eine für den Adserver lesbare Datei, die auf die Adserver verteilt wird, im Speziellen:
- Konvertierung der vom Profiler/LDAP-System erstellten Dateien von einem TAB-delimited ASCII-Format nach einem vom Betreiber des Systems definierten komprimierten Format.
- Verteilung der Dateien auf die 3 Adserver

Der vom Profiler/LDAP-System erstellte DB-Dump wird dem DB-Builder auf einem definierten Mountpoint zur Verfügung gestellt.

### Zum AdServer:

Der Adserver besitzt sogenannte Callouts, innerhalb derer Programm-Erweiterungen definiert werden können. Bei jedem Requests wird die UID ermittelt, mit derer von der vom DB-Builder bereitgestellten Datenbank die Profilinformationen bezogen werden. Die von den Diensten gelieferten Attribute werden um diese Profilinformationen erweitert. Es ist für den AdServer in evtl. nachlaufenden, späteren Prozessen und letztendlich auch für den Anwender transparent, woher die Segmentation Variablen kommen. Somit kann auf gleiche Weise auf die von den Diensten oder vom Profiler gelieferten Daten ein Order-Targeting durchgeführt werden.

Bisherige Tests haben gezeigt, dass die Gesamtperformance des Adservers abnehmen kann, wenn die Latenzzeit des Zugriffes auf externe Ressourcen ansteigt. Deshalb wird die Latenzzeit des Zugriffes auf die externe Datenbank möglichst unter 2ms gehalten. Bei längeren Antwortzeiten ist der Request-Vorgang abzubrechen, so dass die angeforderten Profilinformationen dem Targeting nicht zur Verfügung stehen (Timeout). Zusätzlich kann per Konfiguration der Zugriff auf die Datenbank unterbunden werden, so dass keine negativen Auswirkungen auf die Gesamtperformance auftreten. Weiterhin kann jeder Zugriff auf die Datenbank (wird vom Betreiber des Systems definiert) mit einem Timeout belegt werden, so dass die Antwortzeiten ein Maximum nicht überschreiten. Darüber hinaus kann innerhalb des Adclients ein Request-Timeout definiert werden, was die Zuverlässigkeit und Sicherheit des Systems weiter erhöht.

### Skizzierung des Ablaufs:

Die externe Datenbank wird vorzugsweise vom Systembetreiber erstellt ist eine einfache Filesystem-DB, in der Key-Value-Pairs gespeichert werden. Die UID ist in diesem Fall der Key und die Profilinformation der Value. Der Value besitzt keine von der Berkeley-DB vorgegebene Struktur, so dass die Struktur von der Applikation bestimmt wird. Innerhalb des Adserver-Prozesses wird durch den Einsatz des komprimierten Formats der Daten kein signifikanter Speicher beansprucht. Vielmehr können die komprimierten Daten allesamt im Hauptspeicher des Adserver-Prozesses abgelegt werden.

Die hohe Performance wird durch den Filesystem-Cache erreicht werden, der die zu letzt angeforderten Blöcke cached. Innerhalb einer User-Session werden die angeforderten Daten somit hauptsächlich aus diesem Cache bedient.

Um die Einbindung der externen Komponenten zu optimieren, noch folgende Maßnahmen vorgeschlagen:
- die Integration in den Adserver ist per Konfiguration an- und abschaltbar
- es gibt einen von außen konfigurierbaren Timeout, wieviel Zeit die externer Komponente für ihre Antwort maximal brauchen darf

Durch die lokalen Datenbanken sind die Adserver vom LDAP-Server entkoppelt. Ein Ausfall des LDAP-Servers beeinflusst das Auslieferungsverhalten Adserver nicht.

### Zur Verarbeitung der LogFiles:

Sollten bei der Verarbeitung der Logfiles Probleme auftreten (Logstrom kann nicht von der Box abgegriffen werden, Logfile fehlerhaft, Ausfall des Rechners und damit verbundener Verlust von Logzeilen, ...), so stellt dies keine Beeinträchtigung des zur Verfügung stehenden Profils dar, da statistisch gesehen ein einzelnes Logfile nicht relevant für die Erstellung der Profile ist.

### Zur Reichweitenverlängerung

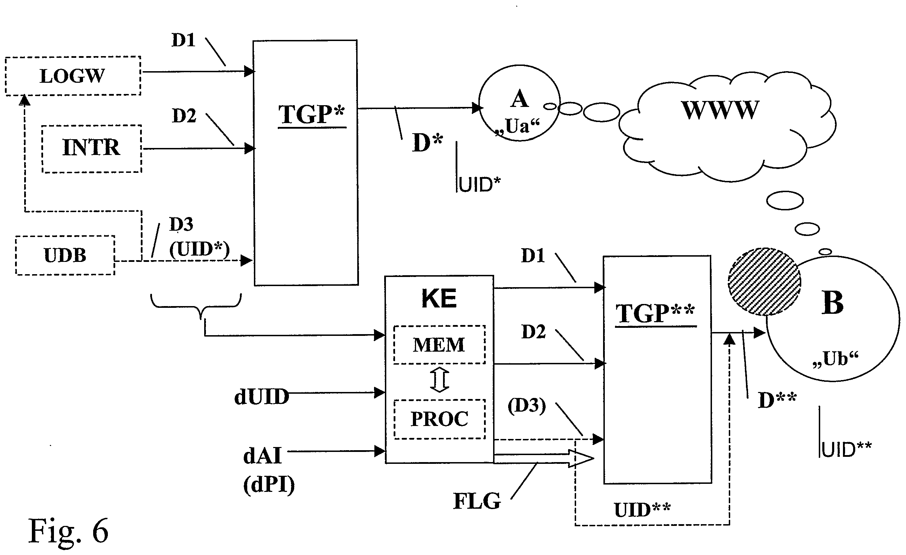

### (siehe insbesondere Figuren 6 bis 9)

Auch in den hier gezeigten und nachfolgend näher beschriebenen Beispielen wird von dem als "WorldWideWeb", kurz WWW, bekannten Informationsnetzwerkes ausgegangen, also von dem im Internet etablierten Hyper-Media-System WWW, in welchem eine einheitliche Oberfläche für die Darstellung von Informationen und Schnittstellen für verschiedene Internetdienste zur Verfügung gestellt werden. Die Nutzer finden im WWW auf vielen Internet-Plattformen die unterschiedlichsten Webauftritte (Websites) und Internetseiten (Webpages) mit allen Arten von Informationen, wie z.B. auch Katalogseiten, Internetseiten von Auskunftsdiensten, Reisediensten, Suchmaschinenergebnissen etc.. Dabei wird oft zusätzlich zur eigentlichen Information Online-Werbung, insbesondere in Form von Werbebannern, dargestellt. Jede Internet-Plattform kann also als Medienangebot verstanden werden, über das auch Werbung transportiert wird, um unter den Nutzern gezielt potentielle Kunden zu bewerben.

Die Figur 6 zeigt in einer schematischen Darstellung die Anordnung von zwei Medienangeboten A und B, die hier kurz auch Angebote A und B genannt werden und die im WWW jeweils als Website eingestellt sind. Für jedes Angebot wird jeweils ein System TGP* bzw. TGP** eingesetzt, das im wesentlichen dem in der Figur 3 gezeigten System entspricht. Allerdings werden jetzt beide Systeme TGP* und TGP** miteinander verknüpft bzw. über eine Einheit KE verbunden, um die Steuerung der Werbung auf beiden Angebote A und B optimal aufeinander abzustimmen. Bei dem ersten Angebot A handelt es sich z.B. um die Website einer bekannten TV-Serie www.gzsz.de, die eine Nutzerschaft Ua von mehreren Hunderttausend Menschen umfasst. Zur Schaltung und Platzierung von Online-Werbung wird ein erstes System TGP* eingesetzt. Dieses System TGP* erreicht durch Erfassung von bestimmten Daten D1 bis D3 und Berechnung von Steuerungsdaten D* eine zielgerichtete Steuerung der Online-Werbung, so dass diese sehr effizient ist. Die Schaltung der Werbung kann so gesteuert werden, dass die Steuerungsdaten D* in Abhängigkeit der Nutzereigenschaften, hier dargestellt durch die Nuterkennung UID*, erzeugt werden. Damit können genaue Zielgruppen definiert und gezielt beworben werden, wobei die Nutzerkennungen UID* im System anonymisiert werden, so dass keine direkten Rückschlüsse auf die Person des jeweiligen Nutzers gemacht werden können. Das System TGP* kann aber z.B. feststellen, dass der jeweilige Nutzer zu einer bestimmten Altersklasse sowie Einkommensgruppe gehört und männlich ist. Damit kann der Nutzer einer bestimmten Zielgruppe, z.B. "männliche, wohlhabende Senioren", zugeordnet werden. Solch eine Zielgruppe wird auch kurz "WOOF" (Akronym für "Well off older Folks") genannt. Das System TGP* veranlasst durch die Steuerungsdaten D* eine über AdServer ausgeführte Auslieferung der entsprechenden Online-Werbung, also z.B. Werbung für exklusive Kreuzfahrten, für Senioren-Wellness-Angebote oder auch für andrologische Medizin und Präparate usw.. Jedoch wird diesem Nutzer nicht "unpassende" Werbung geliefert, die z.B. auf Angebote für Familien- und Kinderferien oder Hygieneartikel für Frauen o.ä. gerichtet sind. Eine besondere Eigenschaft des Systems TGP* und auch des hier gezeigten TGP** ist es, dass nutzerabhängig eine zielgerichtete Online-Werbung gesteuert werden kann. Dazu werden auch personenbezogene Daten D3 erfasst und in Verbindung mit anonymisierten Nutzerkennungen UID* verarbeitet.

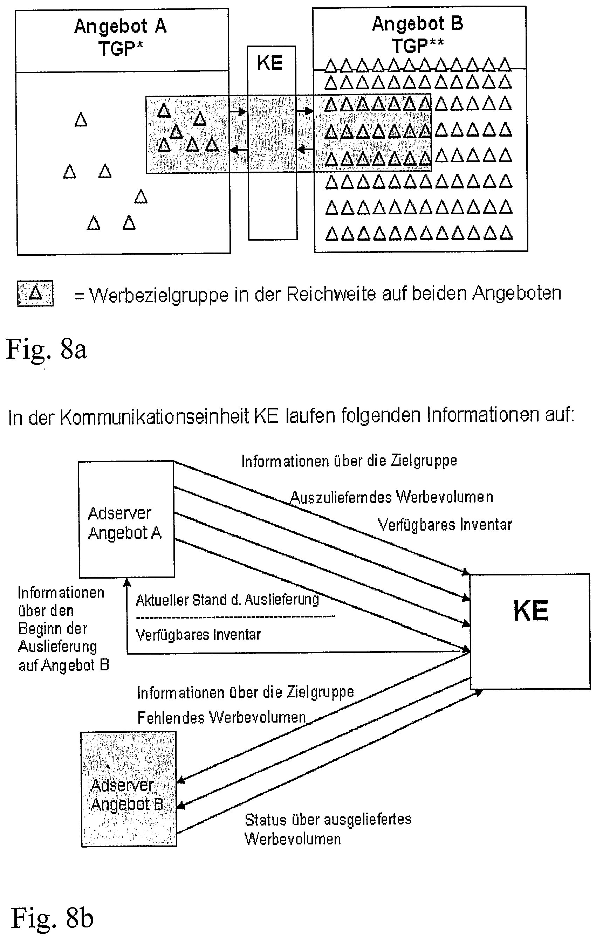

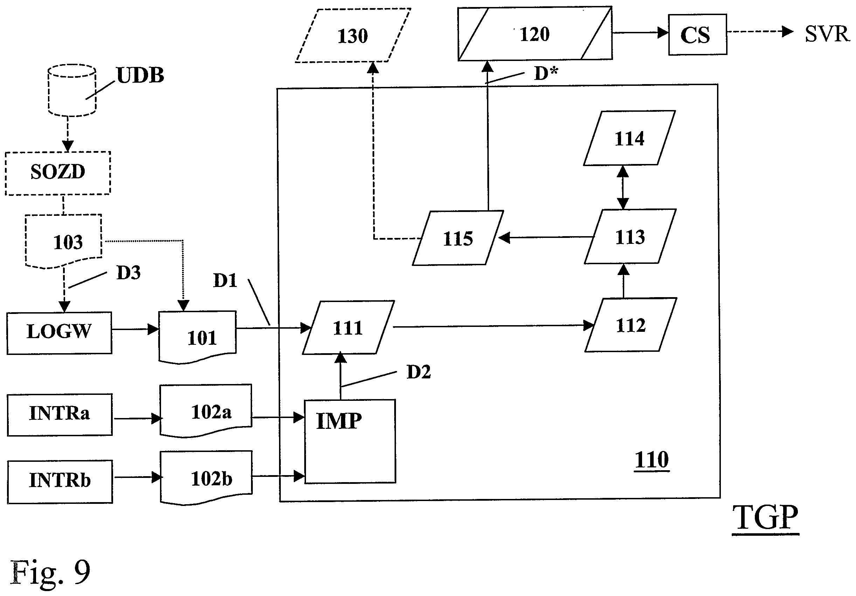

Der genaue Aufbau und die Funktion eines solchen Systems, das hier mit TGP* bzw. TGP** bezeichnet ist, wird noch im Detail anhand der Figuren 8 und 9 erklärt.

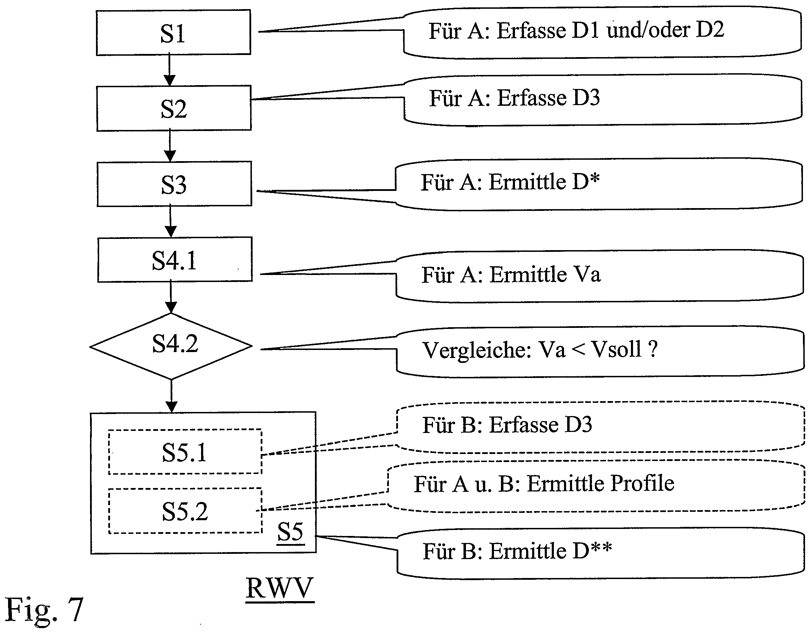

Hier in den Figuren 6 und 7 geht es zunächst um die Anordnung und das Zusammenwirken von mehreren solcher Systemen am Beispiel der beiden gezeigten Systeme TGP* und TGP**, die jeweils im wesentlichen dem System nach Figur 3 entsprechen. Dazu wird hier eine Vorrichtung KE vorgeschlagen, die quasi als Kommunikationseinheit zwischen die Systeme TGP* und TGP** geschaltet wird und die eine transparente und konvergente Reichweitenverlängerung von dem ersten Medienangebot A auf ein zweites größeres Medienangebot B erreicht:
Ausgehend von der über das erste Angebot A erreichbaren Nutzerschaft Ua, die z.B. eine erste Reichweite von 500.000 Nutzer umfasst, soll nun auf eine geplante Reichweite vom 4 Millionen Nutzern erweitert werden. Dazu soll das zweite Angebot B genutzt werden, das z.B. das Online-Portal www.web.de ist und das eine Nutzerschaft Ub von ca. 18 Millionen Nutzern (unique users) umfasst. Wie in der Figur 6 durch entsprechende Kreise angedeutet wird, ist das Angebot B deutlich größer als A, wobei aber eine Überlappung .der beiden Nutzerschaften Ua und Ub auftreten kann und bei der Reichweitenerweiterung berücksichtigt werden sollte.

Die Reichweitenerweiterung wird im wesentlichen von der Vorrichtung KE ausgeführt, die auch in der Figur 6 dargestellt ist und die nach dem in der Figur 7 gezeigtem Verfahren arbeitet. Deshalb wird nachfolgend auf beide Figuren 6 und 7 Bezug genommen:
Die Vorrichtung KE hat quasi die Funktion einer Kommunikationseinheit, die beide TGP-Systeme miteinander verbindet und somit die Steuerung der Online-Werbung auf beiden Plattformen A un B miteinander verschmelzt und harmonisiert. Die Vorrichtung KE enthält dazu im wesentlichen Datenverarbeitungsmittel PROC, die als Rechner bzw. Prozessor ausgebildet sind, und damit verbundene Datenspeichermittel MEM, die den eigentlichen Arbeits-Datenspeicher (RAM) für den Prozessor umfassen wie auch Datenspeicher für die Zwischenspeicherung der Nutzdaten (Festplatten o.ä.) sowie für die Datenverwaltung (Datenbank) selbst. Die Vorrichtung KE liefert unter bestimmten Bedingungen die Eingangsdaten D1 und D2 sowie ggf. D3 für das zweite System TGP**, wobei sie auf die entsprechenden Eingangsdaten des ersten Systems TGP* zurückgreift bzw. diese auswertet und/oder abwandelt. Somit steuert die Vorrichtung KE die Reichweitenerweiterung.

Wie das Ablaufdiagramm in der Figur 7 zeigt, werden im Rahmen des Verfahrens RWV zur Reichweitenerweiterung zunächst die Schritte S1 bis S3 durchgeführt, in denen das erste System TGP* zumindest aus den Eingangsdaten D1 und/oder D2 sowie D3 erfasst und daraus die Steuerungsdaten D* für das erste Angebot A ermittelt. Diese Funktion wird an sich noch näher anhand der Figur 9 beschrieben, auf die später eingegangen wird. Als Ergebnis der hier in der Fig. 7 gezeigten Schritte S1 bis S3 werden vom System TGP* Steuerungsdaten D* für den jeweiligen Nutzer unter seiner anonymen Kennung UID* erzeugt und an den (nicht dargestellten) AdServer für das Angebot A ausgeliefert.

Um nun über eine Reichweitenerweiterung auf das Angebot B zu entscheiden, ermittelt die Vorrichtung KE im Schritt S4.1 das tatsächlich im Angebot A erreichte Werbevolumen Va und vergleicht dies im Schritt 4.2 mit einem Sollwert Vsoll bzw. Schwellwert, der das gewünschte bzw. geplante Werbevolumen angibt. In diesen Vergleich sind mehrere Kriterien bzw. Fragen einbezogen werden, nämlich:
a) Die Frage, ob mit dem erreichten Werbevolumen Va, das gewünschte Werbevolumen Vsoll noch nicht abgedeckt ist, d.h.: Va < Vsoll?
   Wenn JA, dann ist eine Reichweitenerweiterung überhaupt sinnvoll.
b) Und wenn JA, dann die wird geprüft, ob das noch nicht abgedeckte Restvolumen, also die Differenz Vsoll - Va bereits vollständig mit dem Angebot B abgedeckt werden kann, d.h. ob die Differenz kleiner als die potentielle Nutzerschaft Ub ist?
   Wenn JA, dann würde eine Reichweitenerweiterung auf das Angebot B ausreichen und weitere Angebote müssten nicht betrachtet werden.
b1) Es wird sogar genauer geprüft, ob nämlich die tatsächlich über das Angebot B erreichbare Nutzerschaft ausreicht, das Restvolumen abzudecken. Dazu wird zunächst die Differenz dUID ermittelt (vergl. Fig. 6), die angibt, welche Nutzer über das Angebot B zusätzlich zum Angebot A erreicht werden können, d.h die Größe der Nutzerschaft Ub - dem Überlappungsteil mit der Nutzerschaft Ua. Es könnte z.B. der Fall auftreten, dass Va = 500.000 und Vsoll = 4 Millionen, d.h. das Restvolumen 3,5 Millionen und die Nutzerschaft Ub = 3,8 Millionen betragen, so dass das Angebot B ausreichend groß wäre. Jedoch gibt es eine Überlappung der Nutzerschaften Ub mit Ua in Höhe von 400.000. Dann beträgt die effektive Ub, also die tatsächlich über das Angebot B erreichbare Nutzerschaft, nur 3,4 Millionen, was zu klein wäre um das Restvolumen abzudecken. In diesem Fall müsste entschieden werden, ob die Reichweitenerweiterung auf Angebot B ausreichend groß ist, weil in Summe immerhin 3,9 Millionen Nutzer effektiv erreichbar wären.
c) Weitere Kriterien sind die sog. AdImpressions AI oder auch PageImpressions, also Maßzahlen für die Stärke eine Werbkampagne. Es wird z.B. geprüft, ob die gewünschte Anzahl von AdImpressions AIsoll bereits durch das erste Angebot A abgedeckt wird, so dass eigentlich keine Erweiterung auf das zweite Angebot B erforderlich wäre. Dieselbe Prüfung kann auch bei den PageImpressions PI durchgeführt werden. Das bedeutet: Nur wenn eine Differenz dAI bzw. dPI besteht, die größer als Null ist, wird auf das zweite TGP-System TGP** erweitert. Die Auswertung dieser KriterienAI bzw. PI erfolgt einfach durch eine Statistik der laufenden Online-Werbung auf dem Angebot A, welche das erste TGP-System TGP* oder die Kommunikationseinheit KE durchführen kann, und wird dann als Eingangsgröße(n) für das zweite TGP-System TGP** genutzt. (siehe auch Fig. 6).

Die Steuerung der Werbung erfolgt auf den jeweiligen Nutzer bezogen, wobei auch im zweiten TGP-System TGP** die ersten und zweiten Daten D1 bzw. D2 sowie vorzugsweise auch die dritten Daten D3 berücksichtigt werden. Dabei wird anhand der Nutzerkennung UID** erkannt, ob nicht bereits ein mit dem ersten System TGP* erreichter Nutzer vorliegt. Sind die Nutzerkennungen in beiden System gleich (UID** = UID*), so kann die Auslieferung der Online-Werbung über das System TGP** auf das zweite Angebot B unterbunden werden. Dazu wird vorzugweise ein Kennzeichen in die Steuerungsdaten D** eingefügt, wie z.B. ein Kennbit bzw. Flag. Dadurch wird erreicht, dass die Reichweitenerweiterung besonders auf die noch nicht erfasste (neue) Nutzerschaft abzielt, also auf den noch nicht erreichten Teil der Nutzerschaft Ub.

Wie auch anhand der Figuren 8a und 8b verdeutlicht wird, können durch die hier vorgestellte Technologie die Reichweiten eines nicht ausreichend online zur Verfügung stehenden Medienangebotes A transparent in die Reichweite eines anderen Medienangebotes B verlängert werden. Interessant ist diese Möglichkeit insbesondere im Zusammenhang mit einer crossmedialen Vermarktung eines Angebotes. Hierzu ein weiteres Beispiel : Es soll Werbung im Rahmen einer Konvergenz-Kampagne "TV/Online" für die Fernsehserie "GZSZ", sowohl im Fernsehen als auch im Internet auf der Website www.gzsz.de erfolgen. Diese Website hat als "Special Interest Site" aber zuwenig Reichweite und Zugriff. Ziel des hier vorgestellten Verfahrens ist es, das nicht verfügbare Online-Mediainventar auf www.gzsz.de mit konvergenter Medialeistung aus einer anderen Webite (z.B. www.web.de) aufzufüllen, so dass der Werbekunde die gewünschte Zielgruppe erreicht, egal ob auf www.gzsz.de, d.h. auf das Angebot A, oder auch auf der Verlängerungs-Website www.web.de, d.h. auf Angebot B. Durch die hier vorgeschlagene Lösung geschieht die Reichweitenerweiterung automatisch und gemessen aus dem Verhalten der Werbung auf den Angebot A (www.gzsz.de) extrapoliert auf das Angebot B (www.web.de).

Um die crossmediale Vermarktung des gesamten Angebotes A zu sichern, ist es notwendig, dass von Beginn an ein ausreichendes vermarktbares Online-Potenzial zur Verfügung steht. Die hier vorgestellte Lösung der "konvergente Reichweitenverlängerung" sieht vor, dass mit Hilfe von TGP-Systemen dem Angebot A von Anfang an eine ausreichende oder zumindest ausbaufähige Reichweite für die Vermarktung im Bereich Online zur Verfügung steht, indem eine logische Kombination mit einem Angebot B eingegangen wird. Damit wird es unter Nutzung des Steuerungseigenschaften der TGP-Systeme erstmals ermöglicht, einem Angebot A mit einer unzureichenden Reichweite im Medium Online, seine Zielgruppe, die das Angebot A an Werbekunden verkauft hat, in das Angebot B konvergent und automatisch zu verlängern. Gleichzeitig wird die Interaktion der Werbekampagne mit dem Angebot A analysiert und in die Gestaltung der Verlängerung mitaufgenommen. Damit sind entsprechenden Zielgruppen von Beginn der Publikation des Angebotes A an auch online für die Vermarktung zugänglich.

Wie auch anhand der Figuren 8a und 8b dargestellt wird, kann die Erfindung folgendermaßen umgesetzt bzw. realisiert werden: Um die entsprechenden werberelevanten Zielgruppen für das Angebot A auf einem Angebot B mit der TGP Systematik verlängern zu können, ist eine Erweiterung der TGP-Systematik auf das Angebot A notwendig, welches eine Kommunikation auf Basis eines definierten Variablen-Sets zwischen den beiden Angeboten A & B ermöglicht.

Zu diesem Zweck wird auf dem Angebot A ein System TGP* eingesetzt, welches die entsprechenden Zielgruppen, die durch den Adserver des Angebotes A ausgeliefert werden, nach der TGP-Systematik erfasst, analysiert und zur Verfügung stellt. Das System TGP* auf dem Angebot A liefert mit Hilfe der TGP-Analysen auf Basis der Logfiles, der OnSite-Befragung und der gegebenenfalls vorhandenen Nutzerinformationen durch Registrierungsprozesse die Werbung auf dem online Angebot von A aus. Das Angebot A definiert die Zielgruppe für den Werbekunden und liefert diese mit dem Mediasteuerungssystem TGP* auf seinem Angebot A aus. Bei der Auslieferung der Werbung auf dem Angebot A wird ein Kopplungsprozess initiiert, welcher mit einem zweiten Online Angebot B erfolgt, auf dem die TGP Systematik ebenfalls implementiert ist, nämlich in Form eines zweiten Systems TGP**. Dieser Kopplungsprozess wird durch die Kommunikationseinheit KE gewährleistet.

Um die Informationen zur Identifikation der Zielgruppe des Angebots A auf dem Angebot B zu erhalten, werden die Datenquellen angeglichen, um ein gemeinsames Variablen-Set zu enthalten. Wesentliche Bestandteile des Variablen-Sets sind soziodemografische Informationen wie z.B. Alter, Geschlecht, Haushaltsgröße, Haushaltsnettoeinkommen etc. Damit können die Zielgruppen des Angebotes A auch auf dem Angebot B abgebildet werden.

Der Kopplungsprozess zwischen Angebot A und Angebot B im Rahmen der TGP-Systematik steuert nun das durch einen Kunden gebuchte Werbevolumen aus und stellt sicher, dass dieses auch vollständig ausgeliefert wird.
Dies bedeutet, ist das Volumen aus Angebot A erschöpft, so wird auf Angebot B der Rest bis zur Erfülllung des Werbevolumens in der gleichen Werbezielgruppe ausgeliefert.

Der in der Vorrichtung KE bzw. Kommunikationseinheit ablaufende Prozess lässt sich im wesentlichen mit den folgenden Schritten a) - f) beschreiben:
a) Die Kommunikationseinheit KE erhält gleichzeitig die Informationen zur Zielgruppe vom Angebot A und sendet diese an das Angebot B, wenn die Bedingung b). erfüllt ist;
b) Wenn das auszulieferndes Werbevolumen auf dem Angebot A größer als das verfügbare Inventar in der Zielgruppe ist, dann sendet die Kommunikationseinheit KE eine Anfrage an den Adserver von Angebot B und fragt das verfügbare Inventar dort ab;
c) Die Kommunikationseinheit erhält bei Einritt der Bedingung b) ständig die Informationen über die ausgelieferten Werbemittel in Abhängigkeit vom zeitlichen Verlauf;
d) Die Kommunikationseinheit KE berechnet auf Basis dieser Informationen den Index für die Einschaltung des Adservers von Angebot B;
e) Wird der Schwellenwert erreicht, so sendet die Kommunikationseinheit KE die Information an den Adserver des Angebotes B und dieser beginnt mit der Auslieferung des fehlenden Werbevolumens.
f) Der Adserver des Angebotes B liefert die Information des Beginns der Auslieferung an die Kommunikationseinheit KE, die diese Information wiederum an den Adserver des Angebotes A weitergibt.

Mit der transparenten Reichweitenverlängerung hat ein Angebot A die Möglichkeit, seine Nutzerschaft auf einem Angebot B zu verlängern, unabhängig von der Bedingung, ob die vergleichbare Zielgruppe des Angebotes A ausreichend ist. Dadurch können entsprechenden Werbekampagnen, die auf Angebot A anlaufen, in der Reichweite des Angebotes B transparent verlängert werden. Dabei ist ferner auch die Option gegeben, dies über mehrer Angebote zu kombinieren, in dem die Kommunikationseinheit KE die entsprechenden Informationen verarbeitet und den Angeboten dann in aufbereiteter Form für den jeweiligen Adserver zur Verfügung stellt.

Im folgenden wird hier näher auf die Figur 9 eingegangen, die als im Detail den Aufbau eines TGP-Systems zeigt (vergl. TGP* und TGP** in Fig. 6). Das hier in der Figur 9 gezeigte System TGP hat mehrere Systemkomponenten, nämlich eine Datenverarbeitungsvorrichtung 110, die einem als Profiler eingerichteten Rechner entspricht, sowie eine damit verbundene Steuervorrichtung 120, die einem als AdServer eingerichteten Rechner entspricht, der einen als ContentServer CS eingerichteten Rechner steuert und mit Werbeformen beliefert, um nutzerabhängig und zielgerichtet die Werbung in Form von Werbebannern in die dem Nutzer angezeigten Webpages zu integrieren. Das geschieht ggfs. auch durch Steuerung weiterer Server, so wie durch den Pfeil auf "SRV" angedeutet.

Die Datenverarbeitungsvorrichtung (Profiler) 110 erfasst die verschiedenen Eingangsdaten D1, D2 und D3 und wertet sie aus, um für den jeweiligen Nutzer ein Nutzerprofil zu erstellen und Steuerungsdaten D* für die Steuervorrichtung (AdServer) 120 zu erzeugen, welche die Online-Werbung gezielt ausliefert. Die Nutzerprofile werden anonym verwaltet. Dazu gibt der Profiler 110 für jeden Nutzer eine Nutzerkennung (Nutzer-Identität) vor, zu der dann auch das jeweilige Nutzerprofil zugeordnet wird. Die Nutzerkennung ist ein per Pseudo-Zufallsgenerator erzeugter Code (anonyme Kennung), der anonym ist. Dabei werden Bezugnahmen wie Name und Vorname des Benutzers verworfen, so dass im Profiler 110 selbst alle nutzerspezifischen Daten nur unter der jeweiligen Nutzerkennung behandelt werden, die für externe Systeme eine anonyme Kennung darstellt. Somit kann auch nicht anhand der vom Profiler erzeugten Steuerungsdaten D* auf die Person des Nutzers zurückgeschlossen werden (vergl. Nutzerkennungen UID* bzw. UID** in der Fig. 6). Die Person des Nutzers bleibt anonym, dennoch erlaubt das Nutzerprofil eine zielgenaue und auf den jeweiligen Nutzer zugeschnittene Steuerung der Werbung.

Damit der Profiler 110 besonders gute Nutzerprofile erstellen kann, wertet er verschiedenartige Eingangsdaten D1, D2 und D3 aus, die aus den folgenden Datenquellen gewonnen werden:
Eine erste Vorrichtung LOGW, die einem sog. Logwriter entspricht und die Online-Zugriffe der Nutzer protokolliert, erfasst erste Datensätze 101 in Form von sog. LogFiles. Die darin enthaltenen Daten D1 umfassen im wesentlichen Angaben über das Zugriffsverhalten der einzelnen Nutzer, insbesondere Daten wie Zugriffszeiten, URL, Seitenzuordnung etc..

Weitere Vorrichtungen INTRa und INTRb, die Online-Abfrage-Einrichtungen entsprechen, erfassen vorzugsweise per Online-Fragebogen Angaben über die Nutzer-Interessen, die in entsprechenden Befragungsdatensätzen 102a bzw. 102b vorgelegt werden. Die Datensätze werden in einem Importer IMP zu den Daten D2 zusammenfasst und für den Profiler aufbereitet Die Daten geben ausgewählte bevorzugte Themen-Kategorien aus verschiedenen Interessensgebieten wieder. Ein Nutzer interessiert sich z.B. für Aktien, Sport, insbesondere Fußball, und für Autos. Ein anderer Nutzer interessiert sich für Reisen, insbesondere für Reisen nach Indien, und für Sprachen sowie Geschichte usw..

Es werden nämlich die zweiten Daten D2 mittels mehrerer Online-Befragungen ermittelt. Dabei gehen die Daten D2 zurück auf einen ersten Datensatz 102a und eine zweiten Datensatz 102b, der mittels einer Online-Marktforschungsbefragung bzw. mittels einer Offline-Zielgruppenbefragung ermittelt wird. Durch diese differenzierte Datenerfassung können auch Daten erhoben werden, die über verschiedene Mediengattungen wie Print, TV und/oder Radio erfragt werden und zu aussagekräftigen Reichweitenstudien dienen können, weil sie umfassende Informationen über die Nutzerschaft der jeweiligen Medienangebote wiedergeben. Damit wird ausgenutzt, dass jedes einzelne Medienangebot seine Nutzerschaft sehr genau beschreiben kann, jedoch oft eine Zusammenfassung der Daten fehlt.

Neben den Eingangsdaten D1 und D2 werden noch andere Daten D3 ausgewertet, die personenbezogene Daten im engeren Sinne sind. Diese Daten D3 stammen von der Nutzerdatenbank UDB eines Diensteanbieter-Systems SOZD und werden als Datensätze 103 zur Verfügung gestellt, die eigentlich für die Nutzer-Verwaltung des angebotenen Dienstes (z.B. Email-Dienst) verwendet werden. Im wesentlichen handelt es sich bei diesen Daten D3 um Angaben über den Namen (ggfs. mit Vornamen), Alter und Geschlecht des jeweiligen Dienste-Nutzers. Im Rahmen des hier vorgeschlagenen Verfahrens und Systems werden zumindest die Daten bezüglich Alter, Geschlecht und Postleitzahl verarbeitet. Weitere Daten können hinzukommmen. Die Anzahl dieser Dienste-Nutzer (d.h. alle Email user) ist dabei kleiner als die Anzahl aller hier betrachteten WWW-Nutzer. Dennoch können durch eine Berücksichtigung und Auswertung der Daten D3 sehr wertvolle Erkenntnisse gewonnen werden, die die Zielgenauigkeit der Werbung auch für alle WWW-Nutzer deutlich erhöht.

Der Profiler 110 verarbeitet die Daten D1 bis D3 nach einem besonderen Verfahren, wobei er in einem ersten Schritt zunächst für jeden Nutzer eine Nutzerkennung vergibt. In einem Folgeschritt werden die ersten Daten D1 erfasst, also die aus den LogFiles gewonnen Zugriffdaten, wie z.B. Zugriffszeiten, URL, Seitenzuordnung oder auch IP-Adresse etc.. In einem nächsten Schritt werden die zweiten Daten D2 erfasst, also die oben genannten Befragungsdaten, die die vom Nutzer bevorzugten Interessen angeben. Dieser Schritt umfasst mehrere Teilschritte, nämlich das Erfassen von Befragungsdaten aus einer Markterhebung bzw. Kundenbefragung (Teilschritt zur Ermittlung der Daten 102a) sowie das Erfassen von Befragungsdaten in Form einer Online-Befragung von Kunden oder Kundenkreisen, die gewissen Zielgruppen zugeordnet sind (Teilschritt zur Ermittlung der Daten 102b). Im letzten Teilschritt werden die Befragungsdaten (102a und 102b) zusammengefasst (Bildung der Daten D2).
Im nächsten Schritt werden dann die Daten D1 durch die oben genannten dritten Daten D3 ergänzt, soweit diese Daten, insbesondere Alter und Geschlecht, vorhanden sind. Im gezeigten Beispiel werden die personenbezogenen Daten D3 in die LogFiles der Nutzer eingearbeitet und sind somit in den Daten D1 mitberücksichtigt.

Alle Eingangsdaten durchlaufen dann innerhalb des Profilers 110 eine Datenaufbereitungsstufe 111, die in Form eines LogProzessors ausgebildet ist. Dort werden die Eingangsdaten gefiltert und ggfs. entschlüsselt. Anschließend erfolgt in einer Stufe 112 (auch PFF-Komponente genannt) eine Voraggregation und ggfs. eine weitere Filterung der Daten. In einer nachgeschalteten Stufe 113 und im Zusammenspiel mit der Kernkomponente des Profilers, nämlich mit der Profilbildungstufe 114, werden daraus Daten in einem komprimierten Datenformat, nämlich im sog. TAB delimited ASCII-Format, erzeugt, die bereits die gewünschten Nutzerprofile wiedergeben. Die Nutzerprofile werden dann über eine Profilaufbereitungsstufe 115 (auch DB_Builder genannt) in Form von Steuerungsdaten D* an den AdServer 120 übergeben. Außerdem können die Daten auch noch an eine Analysierungsstufe 130 (auch Analyse-DB genannt) weitergegeben werden, die für Systemwartungszwecke und Optimierungszwecke den Profilierungsprozess analysiert und ggfs. dokumentiert.

Das Verfahren und die danach arbeitenden TGP-Systeme sind weiterhin so ausgestaltet, dass die erstellten Nutzerprofile miteinander verglichen werden und mittels vorgebbarer Prüfkriterien auf Vollständigkeit und Gemeinsamkeit der Daten geprüft werden. Dadurch werden evtl. unvollständige Nutzerprofile erkannt und dann mit Daten aus vollständigen Nutzerprofilen ergänzt. Wenn also ein Nutzerprofil, das mit einem anderen Nutzerprofils eine durch die Prüfkriterien bestimmte ausreichende Gemeinsamkeit aufweist, unvollständig ist, dann wird es mit Daten des anderen Nutzerprofils vervollständigt. Das hat den großen Vorteil, dass auch bei einer evtl. geringen Datenbasis eine qualitativ hochgenaue Zielführung der Werbung gelingt. In diesem Zusammenhang sind besonders die soziodemografischen Daten D3 zu sehen, für die einer eher kleine Datenbasis zu erwarten ist - denn nicht alle WWW-Nutzer sind auch gleichzeitig Dienste-Nutzer (hier z.B. Nutzer des Email-Dienstes).

Das Verfahren ermöglicht es auch, einzelne unvollständige Nutzerprofile mit Daten aus anderen, vorzugsweise vollständigen Nutzerprofilen zu ergänzen, soweit die Profile einander ähnlich sind: Z.B. ergibt sich aus einem bereits erstellten Nutzerprofil, dass der Nutzer 31 Jahre alt und männlich ist sowie Interesse an Aktien, an Sport, insbesondere Fußball, und an Autos hat. Durch Vergleich mit anderen Profilen, erkennt das System, dass es ein ähnliches Nutzerprofil gibt, das einem anderen Nutzer zugeordnet ist, der auch 31 Jahre alt und männlich ist. Dann vergleicht das System die beiden Profile noch eingehender und stellt fest, dass es zumindest ein gemeinsames Interesse gibt, nämlich "Sport". Das System macht nun einen Datenabgleich unter den Daten D2, wodurch für den anderen Nutzer nun auch angenommen wird, dass er genauso wie der erste Nutzer Interesse an Politik hat. Im umgekehrten Fall wird dem anderen Nutzer zugerechnet, dass er sich gleichermaßen wie der erste Nutzer für Fußball und Autos interessiert. Durch diese Maßnahmen wurden beide Profile ergänzt und verbessert, was wiederum die Möglichkeiten für genaue Zielansprachen der Nutzer U und U' erweitert. Aus dem jeweiligen Profil werden dann unter der entsprechenden Nutzerkennung Steuerungsdaten D* für den AdServer erzeugt.

Zu beachten ist, dass die personenbezogenen Daten D3 vorzugsweise nicht unter der generischen Benutzer-Kennungen verarbeitet werden, die die Benutzerverwaltung des Diensteanbieters (z.B. die Benutzer-Verwaltung des Email-Dienstes) verwendet, sondern unter einer Nutzer-Identität (siehe UID* bzw. UID** in Fig. 6), die von dem hier vorgeschlagenen System eigens zum Zwecke der Steuerung von Werbung erzeugt wird, vorzugsweise per Zufallsgenerator als anonymer Code erzeugt wird, um eine Rückführung der Daten auf einzelne Personen auszuschließen. Dieser anonyme Code wird z.B. in Form eines Cookies auf dem PC des Nutzers abgelegt, über den der Nutzer auf das Informationsnetzwerk zugreift. Bei einem späteren Zugriff des Nutzers werden der anonyme Code und das ihm zugeordnete Nutzerprofil erkannt und für die Zielsteuerung der Werbung eingesetzt.

Zu beachten ist auch, dass bereits die Datenerfassung der Eingangsdaten sehr gezielt durchgeführt wird: Um die Informationen zur Identifikation der Zielgruppennutzerschaft des Medienangebotes zu erhalten, wird eine Online Befragung durchgeführt. Diese Online Befragung ermittelt die für das Medienangebot nutzerspezifischen Daten. Basisvariablen sind dabei u.a. Alter, Geschlecht, Haushaltsgröße, Haushaltsnettoeinkommen etc.. Anhand der Daten wird in dem Verfahren mit Hilfe statistischer Verfahren (Faktorenanalyse, Clusteranalyse) und einer Neukodierung der Variablen die entsprechenden Zielpersonen im Rahmen der Online Berfragung ermittelt. Die in die Zielgruppennutzerschaft des Medienangebotes fallenden Personen werden nach den Vorgaben des Medienagbeotes in einer neu erzeugten Variablen markiert. Dabei besteht die Möglichkeit die Zielgruppennutzerschaft des Medienangebotes in weitere Klassen zu unterteilen. Diese Klasseninformation über die Zielgruppennutzerschaft des Medienangebotes wird in das Daten aus der Online Befragung werden der Mediasteuerungstechnolgie TGP zur Verfügung gestellt. Im Rahmen des Analyseverfahrens bei TGP wird dem Ad Server die entsprechende Variable über die Zugehörigkeit des Nutzer des Online Angebotes zu der Zielgruppennutzerschaft des Medienangebotes übergeben.

Mit der hier vorgeschlagenen Methode zur transparenten Reichweitenverlängerung haben Medienangebote die Möglichkeit, ihre Nutzerschaft auf ein Online Angebot zu verlängern, unabhängig von der Bedingung, ob die vergleichbare zielgruppe auf dem Online Angebot das Medienangebot nutzt. Dadurch können entsprechenden Werbekampagnen, die in den jeweiligen Medienangeboten laufen, in der Reichweite transparent verlängert werden.

Die Erfindung ist nicht auf die hier beschriebenen Ausführungsbeispiele beschränkt. Vielmehr sind auch andere Ausgestaltungen der Erfindung denkbar, insbesondere auch im Bereich der Telekommunikation, insbesondere im Mobilfunkbereich, wo beispielsweise mit Hilfe der Erfindung gezielt Werbung per SMS, MMS oder Banner im Browserfenster auf die Endgeräte (Handy, PDA) der Teilnehmer geschaltet werden kann. Gleiches gilt auch für Werbung per akustischen Hinweisen und/oder Audionachrichten auf Telefone von Teilnehmern, insbesondere im Bereich von TK-Anlagen und Call-Cen-ter-Technologien.

### Bezugszeichen-Liste:

- LOGW: Erfassungsmittel für Online-Daten (Logwriter)
- INTR: Erfassungsmittel für Befragungsdaten aus einer Marktforschungs-Befragung (Online- und/oder Offline-Befragung)
- SOZD: Erfassungsmittel für Offline-Daten, insbesondere für soziodemografische Daten
- 100: System zur Steuerung von Werbung in einem Kommunikationsnetzwerk
- 101: Dateien mit Online-Daten D1(Logfiles)
- 102: Dateien mit Befragungsdaten D2 (Interrogative Daten)
- 103: Dateien mit Offline-Daten D3 (Soziodemografische Daten)
- 110: Vorrichtung zur Ermittlung von Profildaten (Profiler)
- 111: Filter für die Online-Daten D1
- 112: Filter für die Befragungsdaten D2
- 113: Filter für die Offline-Daten D3
- 115: Profilierungsmittel
- 116: Adaptermittel zu Anbindung eines AdServers
- 117: Treiber für ein Daten-Analyse-Programm
- 118: Mittel für Datenauszug
- 120: Vorrichtung zur Steuerung und Schaltung von Werbeflächen (AdServer)
- 130: Daten-Analyse-Programm
- WWWW: World Wide Web im Internet
- A: Erste Internet-Plattform (Angebot A)
- B: Zweite Internet-Plattform (Angebot B)
- TGP*,: Systeme zur Steuerung von Online-Werbung auf
- TGP**: der ersten bzw. zweiten Internet-Plattform
- D*, D**: Von den Systemen (TGP*, TGP**) erzeugte Steuerungsdaten für die Online-Werbung auf der ersten bzw. zweiten Internet-Plattform
- KE: Vorrichtung (Kommunikationseinheit) zur Reichweitenverlängerung der Online-Werbung von der ersten Internet-Plattform (A) auf die zweiten Internet-Plattform (B)
- D1, D2,: Eingangsdaten für die Systeme TGP* bzw. TGP**,
- D3: nämlich:
- D1: Erste Daten mit Angaben über das Nutzerzugriffsverhalten, insbes. LogFile-Daten
- D2: Zweite Daten mit Angaben über das Nutzer-Interesse, insbes. Befragungsdaten
- D3: Dritte Daten mit personenbezogenen Angaben, insbes. Alter und Geschlecht
- UDB: Nutzer-Datenbank für einen Online-Dienst
- Ua, Ub: Nutzerschaft der Internet-Plattform A bzw. B
- UID*,: Nutzerkennungen verbunden mit oder integriert
- UID**: in die Steuerungsdaten D* bzw. D**
- FLG: Kennung (Zeichen, Flag) für gleiche oder ähnliche Nutzerschaften in den beidem Internet-Plattformen A u. B
- MEM: Datenspeichermittel
- PROC: Datenverarbeitungsmittel
- RWV: Verfahren zur Reichweitenverlänergung mit den Schritten S1 bis S5
- TGP: Weiteres Beispiel für ein System zur Steuerung von Online-Werbung auf der ersten bzw. zweiten Internet-Plattform
- INTRa: Erfassungsmittel für Befragungsdaten aus einer Marktforschungs-Befragung (Online)
- INTRb: Erfassungsmittel für Befragungsdaten aus einer Kundenbefragung in bestimmten Zielgruppen (Offline)

## Patentansprüche

1. Verfahren (10) zum Steuern von Online-Werbung in einem Informationsnetzwerk (WWW), über das mehrere Nutzer (U, U') Zugriff auf Informationen haben, mit folgenden Schritten:
- jedem Nutzer (U) wird eine Nutzer-Identität (ID) zugeordnet(Schritt 11), wobei die Nutzer-Identität (ID) ein anonymer Code ist, welcher per Zufallsgenerator erstellt wird,
- für jeden Nutzer (U) werden erste Daten (D1) erfasst, die Angaben über sein Zugriffsverhalten auf die Informationen enthalten (Schritt 12),
- für den jeweiligen Nutzer (U) werden zweite Daten erfasst, die Angaben über sein Interesse an der Art von Informationen enthalten (Schritt 13);
- die ersten und zweiten Daten (D1, D2) werden durch dritte Daten (D3) ergänzt, die Angaben über die Person des jeweiligen Nutzers (U) enthalten (Schritt 14); und
- aus den Daten, erste Daten (D1), zweite Daten (D2), dritte Daten (D3), werden für den jeweiligen Nutzer (U) Steuerungsdaten (D*) extrahiert (Schritt 15) und an eine Steuervorrichtung (120) zur Steuerung der Werbung übermittelt (Schritt 16), wobei zumindest die für jeden Nutzer (U) extrahierten Steuerungsdaten (D*) in einem Nutzerprofil (UP) unter der dem zugeordneten Nutzer-Identität (ID) abgespeichert werden (Schritt 15a);
- die erstellten Nutzer-Profile (UP, UP') werden miteinander verglichen und mittels vorgebbarer Prüfkriterien auf Vollständigkeit und Gemeinsamkeit der Daten geprüft.

2. Verfahren (10) nach Anspruch 1, bei dem ein unvollständiges Nutzerprofil (UP'), das mit einem anderen Nutzerprofils (UP) eine durch die Prüfkriterien bestimmte ausreichende Gemeinsamkeit aufweist, mittels der Daten (DI, D2, D3) des anderen Nutzerprofils (UP) vervollständigt wird (Schritt 15).

3. Verfahren (10) nach einem der vorherigen Ansprüche, bei dem die extrahierten Steuerungsdaten (D*) anonymisiert verwendet werden, indem für jeden Nutzer die Steuerungsdaten (D*) zwar unter der zugehörigen Nutzer-Identitäten (ID) aber ohne Bezugnahme auf den Namen der Person des Nutzers (U) verwaltet werden, insbesondere ohne Bezugnahme auf Namensangaben, die in den dritten Daten (D3) enthalten sind (Schritt 15a).

4. Verfahren (10) nach einem der vorherigen Ansprüche, bei dem die dritten Daten (D3) personenbezogene Angaben über den Nutzer (U), insbesondere sein Alter und Geschlecht, enthalten.

5. Verfahren (10) nach der vorherigen Ansprüche, bei dem von zumindest einer Mehrzahl der Nutzer (U, U') über das Informationsnetzwerk (WWW) ein Online-Dienst genutzt wird, der von einem Diensteanbieter angeboten wird; und
bei dem die dritten Daten (D3) aus einer Datenbank (UDB) des Diensteanbieters abgerufen werden (Schritt 14a).

6. Verfahren (10) nach einem der vorherigen Ansprüche, bei dem das Informationsnetzwerk das Internet, insbesondere das WorldWideWeb (WWW) ist; bei dem die Information, auf die die Nutzer (U, U') zugreifen, auf Internetseiten dargestellte visuelle Informationen, insbesondere Portalseiten, Katalogseiten, Internetseiten von Auskunftsdienste, Reisendiensten und/oder Suchmaschinenergebnisse umfassen; und
bei dem die Werbung als Werbebanner (AD1) in die dargestellte Information integriert wird (Schritt 16).

7. Verfahren nach einem der vorherigen Ansprüche, bei dem aus den Nutzerprofilen Gruppendaten extrahiert und zu einem Gruppen-Profil zusammengeführt, wobei die den Nutzern zugeordneten Nutzer-Identitäten verworfen werden.

8. Verfahren (RWV) nach einem der vorhergehenden Ansprüche, bei dem zur Reichweitenverlängerung der Online-Werbung von einer ersten Internet-Plattform (Angebot A), die eine erste Nutzerschaft (Ua) mit einer ersten Reichweite aufweist, auf eine zweite Internet-Plattform (Angebot B), die eine zweite Nutzerschaft (Ub) mit einer zweiten, größeren Reichweite aufweist, die folgenden Schritte weitergebildet werden, indem:
- für die erste Nutzerschaft (Ua) die ersten und/oder zweiten Daten (D1, D2) erfasst werden, die Angaben über das Nutzer-Zugriffsverhalten (D1-LogFile) bzw. Angaben über das Nutzer-Interesse bezüglich Online-Informationen (D2-Befragung) enthalten (S1), und indem die dritten Daten (D3-soziodemografisch) erfasst werden, die personenbezogene Angaben über die jeweiligen Nutzer enthalten (S2); und indem
- aus diesen für die erste Nutzerschaft (Ua) erfassten (D1, D2, D3) erste Steuerungsdaten (D*) für die Online-Werbung auf der ersten Internet-Plattform (A) ermittelt werden (S3); und indem
- ein durch diese Online-Werbung auf der ersten Internet-Plattform (A) erzieltes erstes Werbevolumen (Va) ermittelt wird (S4.1) und mit einem geplanten Werbevolumen (Vsoll) verglichen wird (S4.2); und
- wenn das erste Werbevolumen (Va) kleiner als das geplante Werbevolumen (Vsoll) ist, aus den für die erste Nutzerschaft (Ua) erfassten ersten und/oder zweiten Daten (D1, D2) zweite Steuerungsdaten (D**) für die Online-Werbung auf der zweiten Internet-Plattform (B) ermittelt werden (S5), wobei auch für die zweite Nutzerschaft (Ua) die dritten Daten (D3), die personenbezogene Angaben über die jeweiligen Nutzer enthalten, erfasst werden (S5.1), und wobei für beide Nutzerschatten (Ua, Ub) Profile ermittelt werden, die Gemeinsamkeiten und/oder Unterschiede angeben, um die Online-Werbung auf der zweiten Internet-Plattform (B) auf das Profil der ersten Nutzerschaft (Ua) abzustimmen (S5.2).

9. Verfahren (RWV) nach Anspruch 8, bei dem anhand der dritten Daten (D3) geprüft wird, ob innerhalb der zweiten Nutzerschaft (Ub) nicht bereits Nutzer sind, die auch zu ersten Nutzerschaft (Ua) gehören, und bei dem auf der zweiten Internet-Plattform (B) die Online-Werbung dort nur für diejenigen Nutzer der zweiten Nutzerschaft (Ub) geschaltet wird, die nicht auch zu der ersten Nutzerschaft (Ua) gehören.

10. Verfahren (RWV) nach einem der Ansprüche 8 oder 9, bei dem jedem Nutzer eine Nutzer-Identität (UID) zugeordnet wird, um für die Nutzerschaften (Ua, Ub) die Profile zu erstellen, die Gemeinsamkeiten und/oder Unterschiede angeben.

11. Verfahren (RWV) nach einem der der Ansprüche 8 bis 10, bei dem die Online-Werbung nutzerbezogen ausgeliefert wird, bei dem ein Kennzeichen, insbesondere ein Anzeigerbit (FLG), in die zweiten Steuerungsdaten (D**) eingefügt wird, das den Fall anzeigt, wenn ein Nutzer der zweiten Nutzerschaft (Ub) bereits auch zu der ersten Nutzerschaft (Ua) gehört, und bei dem dann die Auslieferung der Online-Werbung für diesen Nutzer über die zweite Internet-Plattform (B) unterbunden wird.

12. System (100) zum Steuern von Online-Werbung in einem Informationsnetzwerk (WWW), über das mehrere Nutzer (U, U') Zugriff auf Informationen haben, mit:
einer Datenverarbeitungsvorrichtung (110), die jedem Nutzer (U) eine Nutzer-Identität (ID) zuordnet, wobei die Nutzer-Identität (ID) ein anonymer Code ist, welcher per Zufallsgenerator erstellt wird, und
wobei die Datenverarbeitungsvorrichtung erste Daten (D1) auswertet, welche eine erste Vorrichtung (LOGW) bereitstellt und welche Angaben über sein Zugriffsverhalten auf die Informationen enthalten,
bei dem die Datenverarbeitungsvorrichtung (110) für den jeweiligen Nutzer (U) zweite Daten (D2) auswertet, welche eine zweite Vorrichtung (INTR) bereitstellt und welche Angaben über das Interesse des Nutzers (U) an der Art von Informationen enthalten,
und bei dem die Datenverarbeitungsvorrichtung (110) ersten und/oder zweiten Daten (D1, D2) durch dritte Daten (D3) ergänzt, welche eine dritte Vorrichtung (UDB) bereitstellt und welche Angaben über die Person des jeweiligen Nutzers (U) enthalten;
wobei die Datenverarbeitungsvorrichtung (110) aus den Daten (D1, D2, D3) für den jeweiligen Nutzer (U) Steuerungsdaten (D*) extrahiert und an eine Steuervorrichtung (120) zur Steuerung der Werbung übermittelt.

13. System (100) nach Anspruch 12, bei dem das Informationsnetzwerk das Internet, insbesondere das WorldWideWeb (WWW) ist, bei dem die Information, auf die die Nutzer (U, U') zugreifen, auf Internetseiten dargestellte visuelle Informationen, insbesondere Portalseiten, Katalogseiten, Internetseiten von Auskunftsdienste, Reisendiensten und/oder Suchmaschinenergebnisse umfassen, bei dem die Datenverarbeitungsvorrichtung ein als Profiler (110) eingerichteter Rechner ist, der dem zumindest die für jeden Nutzer (U) extrahierten Steuerungsdaten (D*) in einem Nutzerprofil (PU) unter der dem zugeordneten Nutzer-Identität (ID) abspeichert, und bei dem die Steuervorrichtung ein als AdServer (120) eingerichteter Rechner ist, der einen als Contentserver (CS) eingerichteten Rechner steuert, der die Werbung als Werbebanner (AD1) in die dargestellte Information integriert.

## Claims

1. A method (10) for controlling online advertising in an Information Network (WWW), that provides multiple users (U, U ') access to information, the method having the following steps:
- each user (U) gets assigned (step 11) a user identity (ID), wherein the user identity (ID) is an anonymous code that is randomly generated,
- for each user (U) first data (D1) is recorded, containing the information about the user's access behaviour to the information (step 12),
- for each the respective user (U) a second data is captured that contains information about his interest in the type of information (step 13);
- the first and second data (D1 , D2) are supplemented by third data (D3) which contain information about the person of the respective user (U) (step 14);
and
- from the data, first data (D1), second data (D2) and third data (D3), for the respective user (U) control data (D*) is extracted (step 15) and transmitted to a control device (120) for controlling the advertisement (step 16), wherein at least for each User (U) extracted control data (D*) is stored (step 15a) in a user profile (UP) of the user associated with the user identity (ID);
- the created user profiles (UP, UP ') are compared with each other and checked for completeness and commonality of data by specifiable test criteria.

2. Method (10) according to claim 1, wherein an incomplete user profile (UP') that has sufficient commonality with another user profile (UP) determined by the specifiable Test criteria, is completed (step 15) by means of the data (D1, D2, D3) of the other user profile (UP).

3. Method (10) according to one of the preceding claims, wherein the extracted control data (D*) is used anonymized in that for each user (D*) the control data is managed under the associated user identities (ID) but without reference to the name of the person of the user (U), in particular without reference to name information contained in the third data (D3) (Step 15a).

4. Method (10) according to one of the preceding claims, wherein the third data (D3) contains personal information about the user (U), in particular his age and his sex.

5. Method (10) according to one of the preceding claims, in the case of at least a majority of the users (U, U ') is using an online service via the information network, the online service being offered by a service provider (WWW); and
in which the third data (D3) is pulled from a database (UDB) of the service provider (step 14a).

6. Method (10) according to one of the preceding claims, wherein the information network is the Internet, especially the WorldWideWeb (WWW); wherein the information the users (U, U') access, comprise visual information presented on Internet pages , in particular portal pages, catalogue pages, Internet pages of information services, travel services and / or search engine results; and wherein the advertising is integrated (step 16) as advertising banner (AD1) in the represented information.

7. Method according to one of the preceding claims, wherein group data is extracted from user profiles and is merged into a group profile, whereby the users' assigned user identities are discarded.

8. Method (RWV) according to one of the preceding claims, in which to extend the reach of the online advertising of a first Internet platform (offer A) having a first user base (Ua) with a first range, on a second Internet platform (offer B) having a second User base (Ub) with a second, larger range, the following steps are further developed, by:
- for the first user base (Ua) recording the first and / or second data (D1 , D2), the information about the user access behavior (D1 -LogFile) or information about the User interest in online information (D2 survey) is included (S1) and the third data (D3 socio-demographic) collected is personal information about the respective users included (S2); and by
- from those for the first user base (Ua) recorded data (D1, D2, D3) first control data (D*) for the online - determined advertisement on the first Internet platform (A) become (S3); and by
- one through these online advertising on the first internet - platform (A) result obtained first advertising volume (Va) determined becomes (S4.1) and with a planned advertising volume (Vsoll) is compared (S4.2); and
- if the first advertising volume (Va) is smaller than the planned one advertising volume (Vsoll) is, from that for the first user base (Ua) detected first and / or second data (D1, D2) second Control data (D **) for online advertising on the second Internet platform (B) can be determined (S5), including for the second user base (Ua) the third data (D3), the personal information about the respective users contain detected (S5.1), and for both user bases (Ua, Ub) profiles are determined, which indicate similarities and / or differences in order to harmonise the online advertising on the second Internet platform (B) with the profile of the first user base (Ua) (S5.2).

9. Method (RWV) according to claim 8, wherein on the basis of the third data (D3) is checked, whether within the second user base (Ub) are not already users of the first user base (Ua), and in which on the second Internet platform (B) the online advertising is delivered only to those users of the second user base (Ub), who do not belong to the first user base (Ua) as well.

10. Method (RWV) according to one of claims 8 or 9, wherein each user gets assigned a user identity (UID) in order to create the profiles for the user bases (Ua, Ub) which specify the similarities and/or differences.

11. Method (RWV) according to one of claims 8 to 10, in which the online advertising is delivered user-related, in which a flag, in particular an indicator bit (FLG), is inserted into the second control data (D **) indicating the case when a user of the second user base (Ub) already belongs to the first user base (Ua), and wherein the delivery of online advertising via the second Internet platform (B) for this users is then prevented.

12. System (100) for controlling online advertising in an Information Network (WWW), about which multiple users (U, U ') have access to information, the system having:
A data processing unit a direction (110) that each user (U) assigns a user identity (ID), wherein the user identidy is an anonymous code is, which is created by a random number generator, and
wherein the data processing united evaluates first data (D1) comprising a first device (LOG W) provides and containing information about his access behavior of a uf the information,
in which the data processing device (110) for the respective user (U) evaluates second data (D2), which providing a second device (INTR) and containing information about the interest of the user (U) in the type of information
and wherein the data processing device (110) first and / or second data s (D1, D2) by third data (D3) adds what e a third device (UDB) provides and wel che information about the person of the respective user (U) included;
wherein the data processing device (110) extracts from the data (D1 , D2, D3) for the respective user (U) control data (D *) and transmits it to a control device (120) for controlling the advertising.

13. System (100) according to claim 12, wherein the information network is the Internet, in particular the World Wide Web (WWW), wherein the information to which the users (U, U ') access visual pages is displayed on websites Information, in particular portal pages, catalogue pages, websites of information services, travel services and/or search engine results, in which the data processing device as a profiler (110) equipped computer is at least the for Each user (U) extracted control data (D *) in one User profile (PU) under which the assigned user - identity (ID) stores and in which the controller acts as an AdServer (120) controlling a content server (CS) that integrates the advertising as banner (AD1) into the displayed information.

## Revendications

1. Procédé (10) pour contrôler la publicité en ligne dans un réseau d'information (WWW), qui fournit un accès à l'information à plusieurs utilisateurs (U, U'), le procédé ayant les étapes suivantes :
- chaque utilisateur (U) se voit attribuer (étape 11) une identité d'utilisateur (ID), dans laquelle l'identité d'utilisateur (ID) est un code anonyme qui est généré de manière aléatoire,
- pour chaque utilisateur (U), les premières données (D1) sont enregistrées, contenant les informations sur le comportement d'accès de l'utilisateur à l'information (étape 12),
- pour chaque utilisateur respectif (U), une deuxième donnée est saisie qui contient des informations sur l'intérêt qu'il porte au type d'information (étape 13) ;
- les première et deuxième données (D1, D2) sont complétées par des données tierces (D3) qui contiennent des informations sur la personne de l'utilisateur respectif (U) (étape 14); et
- à partir des données, des premières données (D1), des deuxièmes données (D2) et des troisièmes données (D3), pour l'utilisateur respectif (U) des données de commande (D*) sont extraites (étape 15) et transmises à un dispositif de commande (120) pour commander la publicité (étape 16), dans lequel au moins pour chaque utilisateur (U) des données de commande extraites (D*) sont stockées (étape 15a) dans un profil d'utilisateur (UP) de l'utilisateur associé à l'identité d'utilisateur (ID) ;
- les profils d'utilisateurs créés (UP, UP ') sont comparés entre eux et vérifiés pour vérifier l'exhaustivité et le caractère commun des données à l'aide de critères d'essai spécifiables.

2. Procédé (10) selon la revendication 1, dans lequel un profil d'utilisateur incomplet (UP') qui a suffisamment de points communs avec un autre profil d'utilisateur (UP) déterminé par les critères d'essai spécifiables, est complété (étape 15) au moyen des données (D1, D2, D3) de l'autre profil d'utilisateur (UP).

3. Procédé (10) selon l'une des revendications précédentes, dans lequel les données de contrôle extraites (D*) sont utilisées de manière anonyme en ce que pour chaque utilisateur (D*) les données de contrôle sont gérées sous les identités d'utilisateur associées (ID) mais sans référence au nom de la personne de l'utilisateur (U), en particulier sans référence aux informations de nom contenues dans les troisièmes données (D3) (étape 15a).

4. Procédé (10) selon l'une des revendications précédentes, dans lequel la troisième donnée (D3) contient des informations personnelles sur l'utilisateur (U), en particulier son âge et son sexe.

5. Méthode (10) selon l'une des revendications précédentes, dans le cas d'au moins une majorité des utilisateurs (U, U') utilise un service en ligne via le réseau d'information, le service en ligne étant offert par un fournisseur de services (WWW); et dans laquelle la troisième donnée (D3) est extraite d'une base de données (UDB) du prestataire de services (étape 14a).

6. Procédé (10) selon l'une des revendications précédentes, dans lequel le réseau d'information est l'Internet, en particulier le WorldWideWeb (WWW);
dans laquelle les informations auxquelles les utilisateurs (U, U') accèdent, comprennent des informations visuelles présentées sur des pages Internet, en particulier des pages de portail, des pages de catalogue, des pages Internet de services d'information, des services de voyage et/ou des résultats de moteur de recherche; et
dans laquelle la publicité est intégrée (étape 16) en tant que bannière publicitaire (AD1) dans les informations représentées.

7. Procédé selon l'une des revendications précédentes, dans lequel des données de groupe sont extraites de profils d'utilisateurs et sont fusionnées dans un profil de groupe, les identités d'utilisateurs qui leur sont assignées étant rejetées.

8. Procédé (RWV) selon l'une des revendications précédentes, dans lequel on étend la portée de la publicité en ligne d'une première plate-forme Internet (offre A) ayant une première base d'utilisateurs (Ua) avec une première gamme, sur une deuxième plate-forme Internet (offre B) ayant une deuxième base d'utilisateurs ("Ub") avec une deuxième gamme plus large, les étapes suivantes sont développées par :
- pour la première base d'utilisateurs (Ua) enregistrant les première et / ou deuxième données (D1, D2), les informations sur le comportement d'accès des utilisateurs (D1 - LogFile) ou les informations sur l'intérêt des utilisateurs pour les informations en ligne (enquête D2) sont incluses (S1) et les troisièmes données (D3 socio-démographiques) collectées sont des informations personnelles sur les utilisateurs respectifs inclus (S2); et par
- à partir de celles de la première base d'utilisateurs (Ua) données enregistrées (D1, D2, D3) premières données de contrôle (D*) pour la publicité en ligne - déterminée sur la première plate-forme Internet (A) devenir (S3); et par
- un par le biais de ces publicités en ligne sur la première plate-forme Internet (A) le résultat obtenu le premier volume publicitaire (Va) devient (S4.1) et avec un volume publicitaire planifié ("Vsoll") est comparé (S4.2); et
- si le premier volume publicitaire (Va) est inférieur au volume publicitaire prévu (Vsoll) est, à partir de celui de la première base d'utilisateurs (Ua) détectée première et / ou deuxième données (D1, D2) les deuxièmes données de contrôle (D**) pour la publicité en ligne sur la deuxième plate-forme Internet (B) peuvent être déterminées (S5), y compris pour la deuxième base d'utilisateurs (Ua) les troisièmes données (D3), les informations personnelles sur les utilisateurs respectifs contiennent détectées (S5).1), et pour les deux bases d'utilisateurs (Ua, Ub) des profils sont déterminés, qui indiquent des similitudes et/ou des différences afin d'harmoniser la publicité en ligne sur la deuxième plate-forme Internet (B) avec le profil de la première base d'utilisateurs (Ua) (S5.2).

9. Procédé (RWV) selon la revendication 8, dans lequel on vérifie sur la base des troisièmes données (D3), si dans la deuxième base d'utilisateurs (Ub) ne sont pas déjà des utilisateurs de la première base d'utilisateurs (Ua), et dans lequel, sur la deuxième plate-forme Internet (B), la publicité en ligne n'est livrée qu'aux utilisateurs de la deuxième base d'utilisateurs (Ub), qui n'appartiennent pas à la première base d'utilisateurs (Ua) également.

10. Procédé (RWV) selon l'une des revendications 8 ou 9, dans lequel on attribue à chaque utilisateur une identité d'utilisateur (UID) afin de créer des profils pour les bases d'utilisateurs (Ua, Ub) qui spécifient les similitudes et/ou les différences.

11. Procédé (RWV) selon l'une des revendications 8 à 10, dans lequel la publicité en ligne est délivrée en fonction de l'utilisateur, dans lequel un drapeau, en particulier un bit indicateur (FLG), est inséré dans les deuxièmes données de commande (D**) indiquant le cas où un utilisateur de la deuxième base d'utilisateurs (Ub) appartient déjà à la première base d'utilisateurs (Ua), et dans lequel la livraison de publicité en ligne via la deuxième plate-forme Internet (B) pour cet utilisateur est alors empêchée.

12. Système (100) pour contrôler la publicité en ligne dans un réseau d'information (WWW), au sujet duquel plusieurs utilisateurs (U, U') ont accès à l'information, le système ayant:
Unité de traitement de données une direction (110) dans laquelle chaque utilisateur (U) assigne une identité d'utilisateur (ID), dans laquelle l'identité d'utilisateur est un code anonyme, qui est créé par un générateur de nombres aléatoires, et
dans laquelle le traitement de données réuni évalue des premières données (D1) comprenant un premier dispositif (LOG W) fournit et contient des informations sur son comportement d'accès d'un uf de l'information,
dans lequel le dispositif de traitement de données (110) pour l'utilisateur respectif (U) évalue des deuxièmes données (D2), qui fournissent un deuxième dispositif (INTR) et contiennent des informations sur l'intérêt de l'utilisateur (U) pour le type d'informations,
et dans lequel le dispositif de traitement de données (110) première et / ou deuxième données s (D1, D2) par troisième données (D3) ajoute ce qu'un troisième dispositif (UDB) fournit et bien vérifier les informations sur la personne de l'utilisateur respectif (U) inclus;
dans lequel le dispositif de traitement de données (110) extrait des données (D1, D2, D3) pour les données de commande de l'utilisateur respectif (U) (D*) et les transmet à un dispositif de commande (120) pour commander la publicité.

13. Système (100) selon la revendication 12, dans lequel le réseau d'information est l'Internet, en particulier le World Wide Web (WWW), dans lequel l'information à laquelle les utilisateurs (U, U') accèdent à des pages visuelles est affichée sur des sites Web Information, en particulier des pages de portail, des pages de catalogue, des sites Web de services d'information, des services de voyage et/ou des résultats de moteur de recherche, dans lequel le dispositif de traitement de données en tant qu'ordinateur équipé d'un profileur (110) est au moins les données de commande extraites (D*) pour chaque utilisateur (U) dans un profil d'utilisateur (PU) sous lequel l'identité (ID) de l'utilisateur assigné stocke et dans lequel le contrôleur agit comme AdServer (120) commandant un serveur de contenu (CS) qui intègre la publicité en tant que bannière (AD1) dans les informations affichées.
